# EUROPÄISCHE PATENTSCHRIFT

(11) **EP 1 220 422 B1**
(45) Veröffentlichungstag und Bekanntmachung des Hinweises auf die Patenterteilung: **28.04.2004**
(21) Anmeldenummer: 01124022.3
(22) Anmeldetag: 09.10.2001
(51) Int. Cl.: H02K 5/22, H02K 3/50, H02K 11/00, H02K 17/30

(54) **Elektromotor, insbesondere Aussenläufermotor**
Electric motor, in particular outer rotor motor
Moteur électrique, notamment moteur à rotor extérieur

(30) Priorität: 27.12.2000 DE 20021985 U
(43) Veröffentlichungstag der Anmeldung: 03.07.2002
(73) Patentinhaber: ebm-papst Mulfingen GmbH & Co.KG, 74673 Mulfingen (DE)
(72) Erfinder: Streng, Gunter, Dipl.-Ing.(FH), 74575 Schrozberg (DE); Häfner, Jochen, Dipl.-Ing.(FH), 74572 Blaufelden (DE); Müller, Rainer, Dipl.-Ing.(FH), 74639 Zweiflingen-Pfahlbach (DE); Gelbing, Markus, Dipl.-Ing.(FH), 74599 Wallhausen (DE)
(74) Vertreter: Patentanwälte Dr. Solf & Zapf

(56) Entgegenhaltungen:
- WO-A-00/14855
- DE-A- 3 805 060
- DE-A- 4 243 845
- DE-A- 19 723 664
- DE-U- 29 904 361

## Beschreibung

Die vorliegende Erfindung betrifft einen Elektromotor, insbesondere einen Außenläufermotor, mit einem Rotor, mit einem Stator, mit einer elektrische Anschlüsse von Wicklungen des Stators kontaktierenden Schaltscheibe, welche an einer Frontseite des Stators befestigbar ist, und mit einem mit dem Stator frontseitig verbindbaren, die Schaltscheibe überdeckenden Flanschteil.

Elektromotoren dieser Art sind beispielsweise aus der deutschen Offenlegungsschrift DE 42 43 845 A1 und aus dem deutschen Gebrauchsmuster DE 299 04 361 U1 bekannt.

Die DE 42 43 845 A1 beschreibt eine Verschaltungsplatte zum Verbinden der Drahtenden einer Statorwicklung eines Elektromotors, insbesondere eines Elektro-Außenläufermotors, mit einer Anschlußleitung. Die Verschaltungsplatte besteht aus einem Basisteil aus elektrisch isolierendem Material mit einer Aufnahmeöffnung für einen Stirnisolationsschaft des Stators, mit in taschenförmigen Ausnehmungen des Basisteils angeordneten Steckverbindern zum Anschluß der Anschlußleitung sowie mit einem Aufnahmeabschnitt für einen Temperaturwächter und Anschlußfahnen zum Anschluß der Wicklungsdrähte der Motorwicklungen. Die taschenförmigen Ausnehmungen sind paarweise nebeneinanderliegend derart voneinander getrennt am Umfang der Aufnahmeöffnung angeordnet, daß jedes Paar etwa tangential zur Aufnahmeöffnung verläuft, und der tangentiale Berührungspunkt jeweils auf einer gegenüber einer Mittellinie Y-Y durch die Aufnahmeöffnung um einen Winkel a von ca. 30° bis 60° versetzten Geraden durch den Mittelpunkt der Aufnahmeöffnung in spiegelsymmetrischer Anordnung liegt. Die elektrische Verbindung der als Steckverbinder ausgebildeten Verbindungselemente erfolgt mit den Anschlußfahnen über als Blechstanzteile ausgebildete, mit dem Basisteil verbundene Leiterbahnen. Die taschenförmigen Ausnehmungen und die Leiterbahnen sind derart angeordnet und dimensioniert, daß das Basisteil im wesentlichen innerhalb eines durch den Umfang des Stators definierten Umfangskreises liegt. Durch diese Ausbildung ist die Verschaltungsplatten-Anordnung preiswert herstellbar, weist einen geringen Raumbedarf auf, und es kann ein relativ hoher Automatisierungsgrad bei der Herstellung erreicht werden. Die Verschaltungsplatte ist durch einen scheiben- oder kappenförmigen Motorflansch abgedeckt, durch den die Anschlußleitung an die Verschaltungsplatte geführt ist.

Aus dem DE 299 04 361 U1 ist ein Elektromotor, insbesondere ein Außenläufermotor, bekannt, der ebenfalls eine Verschaltungsanordnung zum Verschalten von Statorwicklungsdrähten mit elektrischen Anschlußleitungen aufweist, wobei die Verschaltungsanordnung zum Anschluß der Anschlußleitungen ein Klemmelement aufweist. Um mit einer breiten Verschaltungsvariabilität bei hohem Qualitätsstandard eine sehr weitgehende automatisierte Herstellung und eine anwenderfreundliche Anschlußmöglichkeit zu erreichen, ist das Klemmelement auf einem an einer Stator-Stirnseite gehalterten, scheibenförmigen, aus elektrisch isolierendem Material bestehenden Verschaltungsträger befestigt, wobei der Verschaltungsträger Aufnahmekammem für Schneidklemmkontakte aufweist und die Wicklungsdrähte an dem Klemmelement mittelbar über die Schneidklemmkontakte angeschlossen sind. Der Verschaltungsträger kann entweder mittels eines kappenartigen Deckelteils (Flanschteils) abgedeckt werden, oder es kann darauf ein bodenoffener Klemmenkasten gesetzt werden, durch den ein vergrößerter Aufnahmeraum, insbesondere zur Unterbringung eines Kondensators definiert wird. Zur Heranführung der Anschlußleitungen von außen an das Klemmelement auf dem Verschaltungsträger sind insbesondere in das Deckelteil oder den Klemmenkasten schraubbare Durchführungsteile vorgesehen.

Aus dem Dokument WO-A- 0014855 ist ein weiterer Elektromotor nach dem Stand der Technik bekannt.

Der vorliegenden Erfindung liegt die Aufgabe zugrunde, einen Elektromotor der gattungsgemäßen Art, insbesondere einen Außenläufermotor, derart zu verbessern, daß bei Einhaltung eines hohen Qualitätsstandards und der Möglichkeit einer weitgehenden automatisierten Herstellung der fertigungstechnische Aufwand weiter gesenkt werden kann, insbesondere dadurch, daß die Anschlußverdrahtung weiter vereinfacht wird.

Erfindungsgemäß wird diese Aufgabe dadurch gelöst, daß das Flanschteil aus einer auf die Schaltscheibe aufsetzbaren scheibenförmigen Statorbuchse, die mit dem Rotor, dem Stator und der Schaltscheibe eine Geräteeinheit bildet, und aus einem auf die Statorbuchse aufsetzbaren Anschlußteil mit Kontaktteilen zur elektrischen Verbindung mit korrespondierenden elektrischen Kontaktteilen der Schaltscheibe besteht, wobei an die Kontaktteile des Anschlußteiles ein Motoranschlußkabel anschließbar ist.

Sowohl die aus Rotor, Stator, Schaltscheibe und Statorbuchse gebildete Geräteeinheit als auch das mit einem Motoranschlußkabel konfektionierte Anschlußteil gemäß der Erfindung, können vorteilhafterweise separat voneinander gefertigt werden, wobei für den erfindungsgemäßen Elektromotor ein komplett verdrahteter elektrischer Anschluß hergestellt werden kann, der bei einfacher Montage ohne Zusatzteile nachträglich auf die den Rotor und den Stator umfassende Geräteeinheit aufgesetzt werden kann. Das mit dem Anschlußkabel versehene Anschlußteil kann an einem Fertigungsstandort komplett montiert und geprüft werden, während dies für die Geräteeinheit an einem anderen Standort möglich ist. Für die Verbindung des Anschlußteils mit der Geräteeinheit kann vorteilhafterweise ein Stecksystem Verwendung finden, bei dem vorzugsweise im Stator für den Drahtanschluß Schneidklemmkontakte und in der Anschlußeinheit Flachstecker verwendet werden.

Sowohl jedem Teil der Geräteeinheit als auch dem Anschlußteil kommen dabei mit Vorteil spezifische und hinsichtlich der Gesamt-Motorausführung optimiert aufeinander abgestimmte Funktionen zu: Die Schaltscheibe erfüllt die elektrische Anschlußfunktion. Allerdings erfolgt gegenüber dem eingangs dargestellten Stand der Technik eine Funktionsaufteilung, und zwar dergestalt, daß ein Teil der Anschlußfunktion auch vom Anschlußteil übernommen wird, indem das Motoranschlußkabel im Anschlußteil - nicht direkt an der Schaltscheibe - anschließbar ist. Die Statorbuchse, welche die Geräteeinheit zumindest teilweise isolierend und schützend überdeckt, erfüllt eine Abdeckfunktion - wenngleich auch diese für den gesamten Motor nicht endgültig und für die Geräteeinheit nur teilhaft ist, da die Statorbuchse mindestens eine Durchtrittsöffnung für die Kontaktteile des Anschlußteiles und/oder die Kontaktteile der Schaltscheibe sowie zentrisch für den Stator, z.B. für einen Stirnisolationsschaft des Stators, aufweisen sollte. Die Abdeckfunktion wird zum anderen Teil vom Anschlußteil erfüllt, so daß diesem erfindungsgemäß eine Doppelfunktion zukommt

Das Anschlußteil kann insbesondere einteilig, beispielsweise als Steckergehäuse mit integrierter Abdeckung, oder auch zweiteilig ausgeführt sein, wobei es z.B. ein Abdeckteil und ein Kontaktierungsteil mit den Kontaktteilen für eine steckende elektrische Verbindung mit der Schaltscheibe und zum Anschluß des Motoranschlußkabels aufweist.

Eine weitere, nachfolgend beschriebene, zweiteilige Ausführung besteht darin, daß das Anschlußteil als Klemmenkasten ausgebildet ist, wobei dieser aus einem insbesondere ein Abdeckteil bildenden Oberteil und einem insbesondere ein Kontaktierungsteil - bildenden Unterteil besteht.

Auch die Statorbuchse und die Schaltscheibe der Geräteeinheit können je nach Bedarf - beispielsweise entsprechend der Art der realisierenden Schaltung und insbesondere der Anzahl der zu kontaktierenden Anschlüsse - unterschiedlich ausgebildet sein. Für einen optimalen - d.h. besonders montagefreundlichen - Anschluß ist es hierzu außerordentlich vorteilhaft, wenn auf der Schaltscheibe zur Aufnahme und Halterung ihrer Kontaktteile und/oder der elektrischen Anschlüsse der Wicklungen des Stators Taschen angeordnet bzw. ausgebildet sind. Diese Taschen auf der Schaltscheibe können bevorzugt als durch Zwischenwände getrennte Mehrfach-Kontaktkammem mit mindestens zwei, vorzugsweise drei, Teilkammem ausgebildet und im Umfangsbereich auf der Schaltscheibe angeordnet sein. Durch eine spezielle Ausbildung der Taschen ist es dabei möglich, daß zum elektrischen Anschluß der Wicklungen des Stators des erfindungsgemäßen Elektromotors zur Realisierung einer definierten Motorschaltung mindestens zwei Drahtenden der Wicklungen auf der Schaltscheibe, insbesondere in den Mehrfachkontaktkammem, mindestens doppelt kontaktiert werden, und zwar vorzugsweise mittels Schneidklemmkontakten durch mindestens ein gemeinsames elektrisches Brückenelement und durch ein Kontaktteil des Anschlußteils. Eine solche Kontaktierung vereinfacht den Anschlußvorgang erheblich und senkt somit den Montageaufwand.

Weitere vorteilhafte Ausgestaltungsmerkmale der Erfindung sind in den Unteransprüchen sowie der folgenden Beschreibung enthalten.

Anhand dreier in der Zeichnung dargestellter, bevorzugter Ausführungsbeispiele soll im folgenden die Erfindung näher erläutert werden. Dabei zeigen:
- Fig. 1: eine perspektivische Explosionsdarstellung einer ersten Ausführung eines erfindungsgemäßen Elektromotors,
- Fig. 2: eine perspektivische Explosionsdarstellung der beiden Hauptteile des in Fig. 1 dargestellten erfindungsgemäßen Elektromotors - Anschlußteil und Geräteeinheit,
- Fig. 3: eine perspektivische Darstellung des in Fig. 1 und 2 dargestellten erfindungsgemäßen Elektromotors im Zusammenbau,
- Fig. 4: eine perspektivische Explosionsdarstellung der Teile des Anschlußteils des in Fig. 1 bis 3 dargestellten erfindungsgemäßen Elektromotors
- Fig. 5: eine perspektivische Unteransicht des in Fig. 1 bis 4 dargestellten Anschlußteils im montierten Zustand,
- Fig.6: eine perspektivische Draufsicht auf die in Fig. 1 dargestellte Schaltscheibe des erfindungsgemäßen Elektromotors,
- Fig. 7: eine vergrößerte perspektivische Darstellung eines Randabschnittes der in Fig. 6 dargestellten Schaltscheibe,
- Fig. 8: als Schaltbild, eine mögliche Schaltungsvariante eines erfindungsgemäßen Elektromotors,
- Fig. 9: eine Draufsicht auf die in Fig. 1 sowie 6 und 7 dargestellten Schaltscheibe bei einer Schaltungsvariante gemäß Fig. 8,
- Fig. 10: eine Fig. 9 entsprechende Draufsicht auf die Schaltscheibe der ersten Ausführung des erfindungsgemäßen Elektromotors bei einer weiteren Schaltungsvariante,
- Fig. 11: eine Fig. 1 entsprechende perspektivische Explosionsdarstellung einer zweiten Ausführung eines erfindungsgemäßen Elektromotors,
- Fig. 12: eine Fig. 2 entsprechende perspektivische Explosionsdarstellung der beiden Hauptteile des in Fig. 11 dargestellten erfindungsgemäßen Elektromotors - Anschlußteil und Geräteeinheit,
- Fig. 13: eine Fig. 3 entsprechende perspektivische Darstellung des in Fig. 11 und 12 dargestellten erfindungsgemäßen Elektromotors im Zusammenbau,
- Fig. 14: eine Fig. 5 entsprechende perspektivische Unteransicht des in Fig. 11 und 12 dargestellten Anschlußteils im montierten Zustand,
- Fig. 15: eine perspektivische Draufsicht auf die in Fig. 11 dargestellte Schaltscheibe des erfindungsgemäßen Elektromotors, als Alternative zur Schaltscheibe gemäß Fig. 6,
- Fig. 16: eine perspektivische Explosionsdarstellung einer dritten Ausführung eines erfindungsgemäßen Elektromotors in einer Fig. 2 und 12 entsprechenden Darstellung, d.h. der beiden Hauptteile - Anschlußteil und Geräteeinheit,
- Fig. 17: eine Fig. 3 und 13 entsprechende perspektivische Darstellung des in Fig. 16 dargestellten erfindungsgemäßen Elektromotors im Zusammenbau,
- Fig. 18: eine Fig. 4 entsprechende perspektivische Explosionsdarstellung der Teile des als Klemmkasten ausgebildeten Anschlußteils des in Fig. 16 und 17 dargestellten erfindungsgemäßen Elektromotors, einschließlich eines Kondensators,
- Fig. 19: eine Fig. 5 und 14 entsprechende perspektivische Unteransicht des in Fig. 16 bis 18 dargestellten, als Klemmkasten ausgebildeten Anschlußteils im montierten Zustand.

In den verschiedenen Figuren der Zeichnung sind gleiche bzw. einander entsprechende Teile stets mit denselben Bezugszeichen versehen und werden daher in der Regel jeweils nur einmal beschrieben.

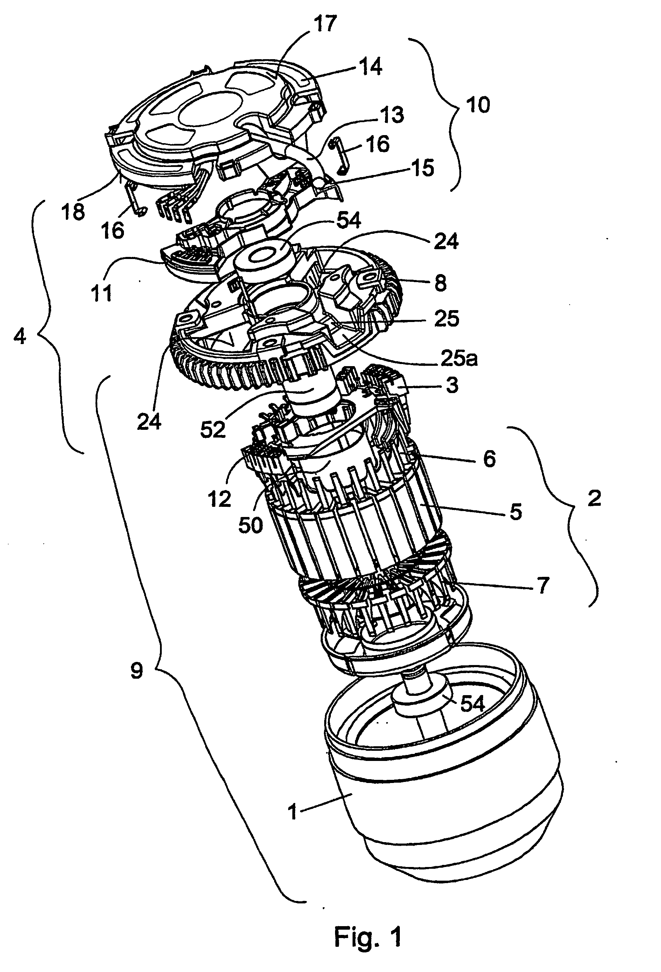

Wie zunächst Fig. 1 veranschaulicht, weist ein erfindungsgemäßer Elektromotor, insbesondere ein Außenläufermotor, einen Rotor 1, einen Stator 2, eine elektrische Anschlüsse von (nicht dargestellten) Wicklungen des Stators 2 kontaktierenden Schaltscheibe 3, welche an einer Frontseite des Stators 2, insbesondere an einem Stirnisolationsschaft 50, befestigbar ist, und ein mit dem Stator 2 frontseitig verbindbaren, die Schaltscheibe 3 überdeckendes Flanschteil 4 auf. Vom Stator 2 sind dabei das Statorblechpaket 5 und zwei sogenannte Endscheiben 6, 7 dargestellt.

Erfindungsgemäß besteht das Flanschteil 4 aus einer auf die Schaltscheibe 3 aufsetzbaren scheibenförmigen Statorbuchse 8 (mit einem angegossenem Lagertragrohr 52 zur Aufnahme von Lagern 54 für den Rotor 1), die mit dem Rotor 1, dem Stator 2 und der Schaltscheibe 3 eine Geräteeinheit 9 bildet, und aus einem auf die Statorbuchse 8 aufsetzbaren Anschlußteil 10 mit Kontaktteilen 11 zur elektrischen Verbindung mit korrespondierenden elektrischen Kontaktteilen 12 der Schaltscheibe 3. Dabei ist an die Kontaktteile 11 des Anschlußteiles 10 ein Motoranschtußkabel 13 anschließbar.

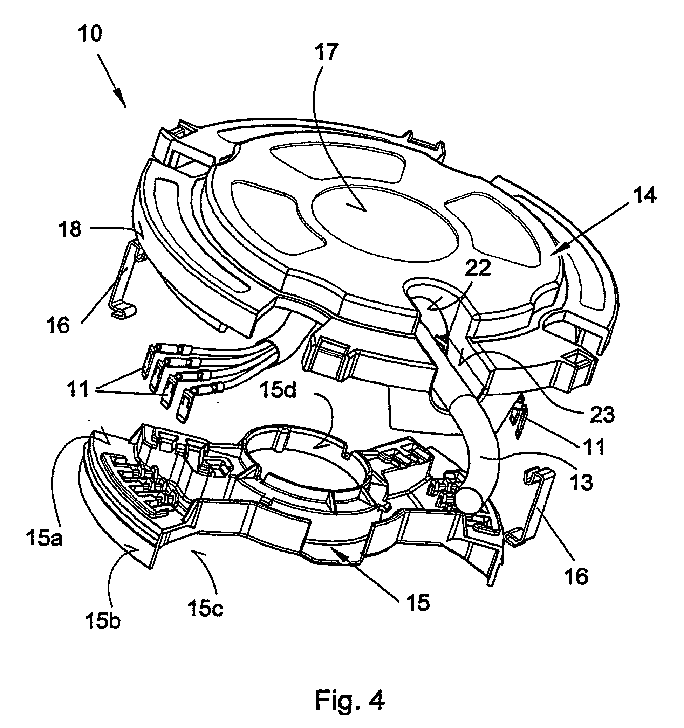

Das Anschlußteil 10 ist zweiteilig ausgebildet, wobei es ein Abdeckteil 14 und ein Kontaktierungsteil 15 mit den Kontaktteilen 11 zur steckenden elektrischen Verbindung mit der Schaltscheibe 3 und zum Anschluß des Motoranschlußkabels 13 aufweist. (Die Einzelteile des Anschlußteils 10 sind in Fig. 4 dargestellt).

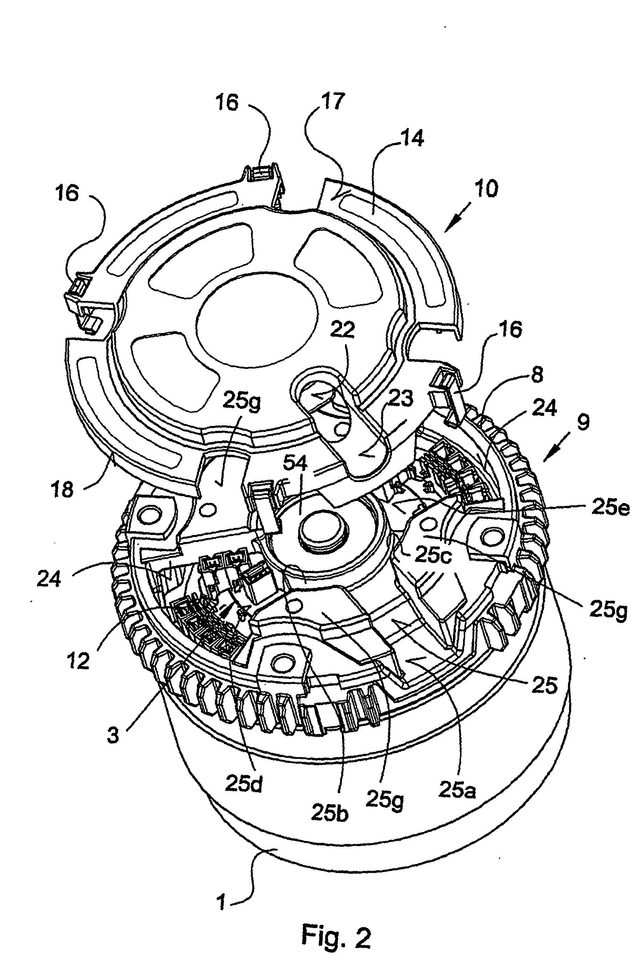

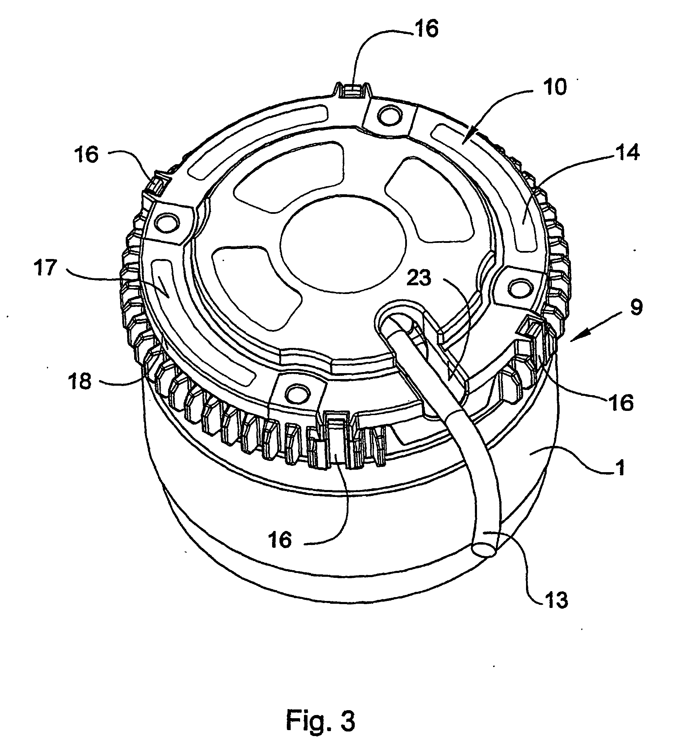

Fig. 2 veranschaulicht, daß die beiden Hauptteile des in Fig. 1 dargestellten erfindungsgemäßen Elektromotors - Anschlußteil 10 und Geräteeinheit 9 jeweils eigenständige, leicht zu handhabende und zu lagerende Baueinheiten bilden, die vorteilhafterweise separat voneinander gefertigt werden können, wobei das Motoranschlußkabel 13 an das Anschlußteil 10 angeschlossen werden kann, und nachträglich - wie Fig. 3 zeigt - auf denkbar einfache Weise - durch Zusammenstecken - montiert werden können. Auf diese Weise kann kostengünstig ein sehr kompakter Motor gefertigt werden.

Zum Zwecke der separaten Herstellung und Lagerung sowie des Transportes des Anschlußteiles 10 und der Geräteeinheit 9 ist es von Vorteil, wenn das Anschlußteil 10 mit der Schaltscheibe 3 bzw. mit der gesamten Geräteeinheit 9 ausreichend fest verbunden werden kann. Dies ist einerseits über Schraubverbindungen möglich, kann aber andererseits insbesondere auch über Verbindungen mit Klammern 16 erfolgen, wie Fig. 2 bis 5, insbesondere aber der Einzeldarstellung der Teile des Anschlußteiles 10 (Fig. 4), entnommen werden kann.

Wie bereits erwähnt, ist das Anschlußteil 10 in der ersten Ausführung der Erfindung zweiteilig ausgebildet, wobei es ein Abdeckteil 14 und ein Kontaktierungsteil 15 mit den Kontaktteilen 11 zur steckenden elektrischen Verbindung mit der Schaltscheibe 3 und zum Anschluß des Motoranschlußkabels 13 aufweist. Das Kontaktierungsteil 15 ist dabei als Steckergehäuse ausgebildet, wobei - wie Fig. 4 des weiteren zeigt - die Kontaktteile 11 des Anschlußteiles 10 mit Vorteil als Stecker, insbesondere als Flachstecker, ausgebildet sein können. Die korrespondierenden Kontaktteile 12 der Schaltscheibe 3 können dann als Buchsen ausgebildet sein oder aus Kontaktteilen bestehen, die unterseitig als Schneidklemmkontakte zur Kontaktierung der Wicklungsdrähte und oberseitig als Steckkontakte für die Kontaktteile 11 des Anschlußteiles 10 ausgebildet sind.

Wie die Darstellungen des Anschlußteiles 10 (Fig. 1 bis 5) zeigen, weist das Abdeckteil 14 eine topfförmige Grundgestalt, mit einem im wesentlichen flachen oder leicht gewölbten Boden 17, mit einem im wesentlichen senkrecht vom Boden 17 abragenden, im wesentlichen zylindrischen Wandungssteg 18 und mit einem zentrischen Ringsteg 19 zur Positionierung des weiter unten beschriebenen Steckeranschlußteils auf.

Es entsteht somit ein Steckeranschlußteil 15 mit zwei sich diametral gegenüberliegenden sektorförmigen Anschlußbereichen, deren Form den im nachfolgenden noch beschriebenen Durchtrittsöffnungen 24 der Statorbuchse 8 angepaßt ist.

Auf der dem Abdeckteil 14 zugewandten Seite des Steckeranschlußteils 15 befindet sich ein zentrischer Ringsteg 20, der beim Zusammenfügen von Abdeckteil 14 und Steckeranschlußteil 15 den Ringsteg 19 des Abdeckteils 14 formschlüssig umgreift, wobei zur verdrehsicheren Montage der beiden Teile eine Codierung 21 vorgesehen ist.

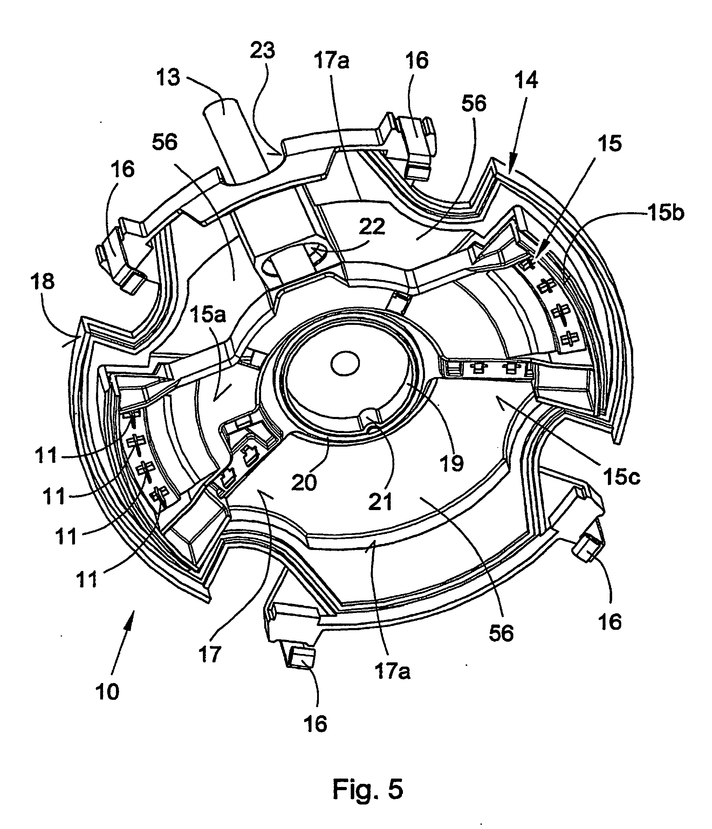

Um einen hohen Feuchtigkeitsschutz zu erhalten, können Abdeckteil 14 und Steckeranschlußteil 15 nach dem Zusammenfügen der beiden Teile miteinander vergossen werden. Zur Herstellung einer dichtenden Verbindung zwischen Statorbuchse 8 und Anschlußteil 10, kann der Boden des Abdeckteils 10 (siehe Fig. 5) in einem von innen betrachtet, nach unten abgesetzten Bereich 17a, mit einem Abdichtmittel 56 ausgekleidet sein. Dieser Bereich 17a übergreift bei der Montage des Anschlußteils 10 am Stator eine Erhebung 25g auf der Stirnseite der Statorbuchse 8 formschlüssig und dichtet dabei zumindest den Umfangsrand der Durchtrittsöffnungen 24 der Statorbuchse vollständig ab. Ein Eindringen von Feuchtigkeit in den Anschlußbereich wird dadurch sicher vermieden.]

Das Motoranschlußkabel 13 kann zum elektrischen Anschluß der Kontaktteile 11 des Anschlußteiles 10 durch eine Durchtrittsöffnung 22 im Boden 17 des Abdeckteiles 14 gezogen und in einen dafür vorgesehenen, trogförmigen, radial nach innen gerichteten Kabelkanal 23 im Boden 17 des Abdeckteiles 14 eingelegt werden. Der Kabelkanal 23 befindet sich bei der ersten Ausführung der Erfindung auf der der Statorbuchse 8 abgewandten Seite des Anschlußteiles 10. Eine Abdichtung der Kabelkanäle 23, 25 erfolgt über eine auf das Motoranschlußkabel 13 aufschiebbare Kabelhülle.

Das Steckeranschlußteil 15 (Fig. 1, 4) weist eine der Form des Abdeckteiles 14 angepaßte Gestalt mit einem Boden 15a und einem Randsteg 15b auf, wobei der Boden 15a in seiner Grundgestalt etwa ringförmig ausgebildet ist, jedoch seine Ringfläche Ausschnitte 15c aufweist.

Die Statorbuchse 8 ist in der ersten Ausführung des erfindungsgemäßen Elektromotors - wie Fig. 1 und 2, am besten Fig. 2, entnommen werden kann - in ihrer Grundgestalt kreisscheibenförmig ausgebildet und weist Erhebungen 25g auf, die wie bereits erwähnt, bei der Montage der Teile in einen abgesetzten Bereich 17a des Abdeckteils eingreifen. Sie weist zwei Durchtrittsöffnungen 24 für die Kontaktteile 11 des Anschlußteiles 10 und/oder die Kontaktteile 12 der Schaltscheibe 3 auf. An ihrem Umfangsrand ist die Statorbuchse 8 mit Kühlrippen versehen, um die aufgrund der Durchtrittsöffnungen 24 reduzierte metallische Oberfläche zu vergrößern und die reduzierte Wärmeabgabefähigkeit wieder auszugleichen. Des weiteren weist die Statorbuchse 8 auf ihrer dem Anschlußteil 10 zugewandten Seite einen insbesondere trogförmigen, an den Durchtrittsöffnungen 24 für die Kontaktteile 11 des Anschlußteiles 10 und/oder für die Kontaktteile 12 der Schaltscheibe 3 endenden Kabelka nal 25 für das Motoranschlußkabel 13 auf.

Der Kabelkanal 25 ist vorteilhafterweise derart aufgebaut, daß er eine kompakte Motorbauweise mit allen Möglichkeiten einer Zugentlastung des Motoranschlußkabels 13 und einer Abdichtung gestattet. Zu diesem Zweck weist er einen vom Umfang der Statorbuchse 8 ausgehenden, im wesentlichen radial nach innen gerichteten Eingangsbereich 25a auf. Im Anschluß an seinen Eingangsbereich 25a verzweigt sich der Kabelkanal 25 in zwei Teilkanäle 25b, 25c (mit etwas geringerem Querschnitt als der Eingangsbereich 25a). Dadurch ist eine Vielzahl von Anschlüssen ungehindert zu realisieren. Außerdem erfolgt eine Verlaufsänderung von einer im wesentlichen radialen Richtung (Eingangsbereich 25a) in eine im wesentlichen umfangsparallele Richtung (Teilkanäle 25b, 25c), wodurch auf das Motoranschlußkabel 13 vorteilhafterweise eine Zugentlastungswirkung erreicht werden kann. Im weiteren Anschluß weisen die Teilkanäle 25b, 25c dann Vereinzelungsbereiche 25d, 25e für die elektrische Anschlußleitung 13 mit gegenüber dem Eingangsbereich vergrößertem Querschnitt auf.

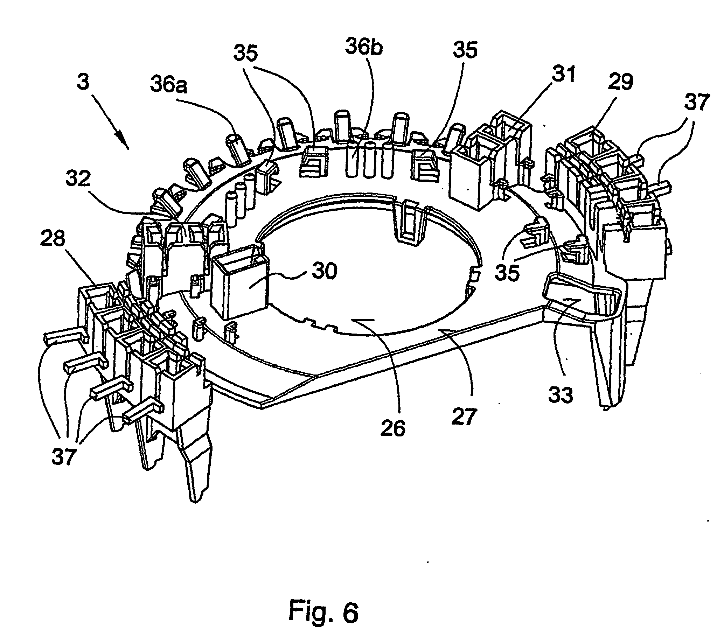

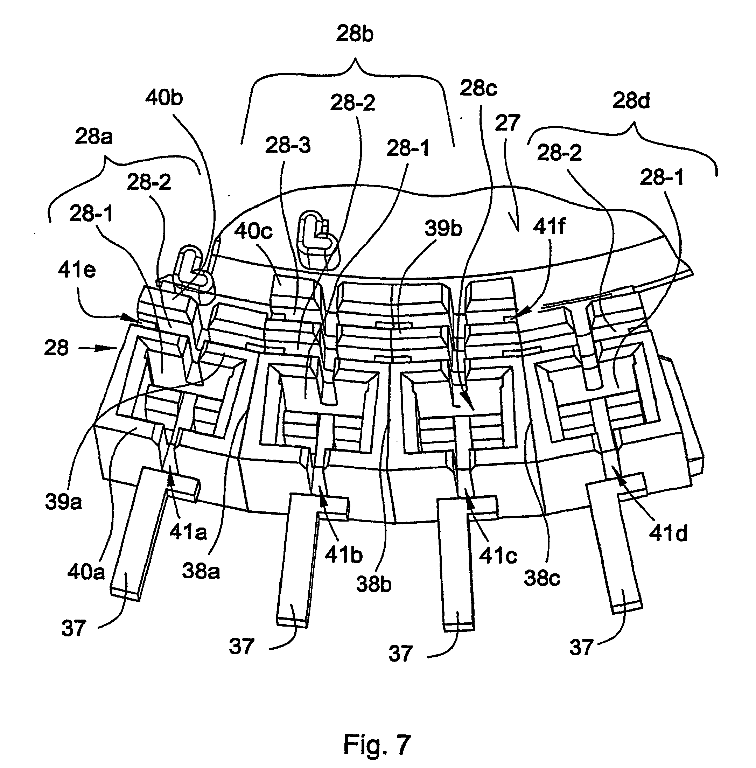

Die Schaltscheibe 3 der ersten Ausführung der Erfindung ist sowohl zur Verschaltung von Kondensatormotoren als auch von Drehstrommotoren geeignet und ist als Einzelteil in Fig. 6 und ausschnittsweise vergrößert in Fig. 7 zu sehen. Aus den zeichnerischen Darstellungen ist zunächst zu entnehmen, daß die Schaltscheibe 3 eine ringabschnittförmige Grundgestalt mit einer zentrischen Durchtrittsöffnung 26 für den Stirnisolationsschaft 50 des Stators 2 aufweist. Die Schaltscheibe 3 besitzt einen im wesentlichen flachen oder leicht gewölbten Boden 27.

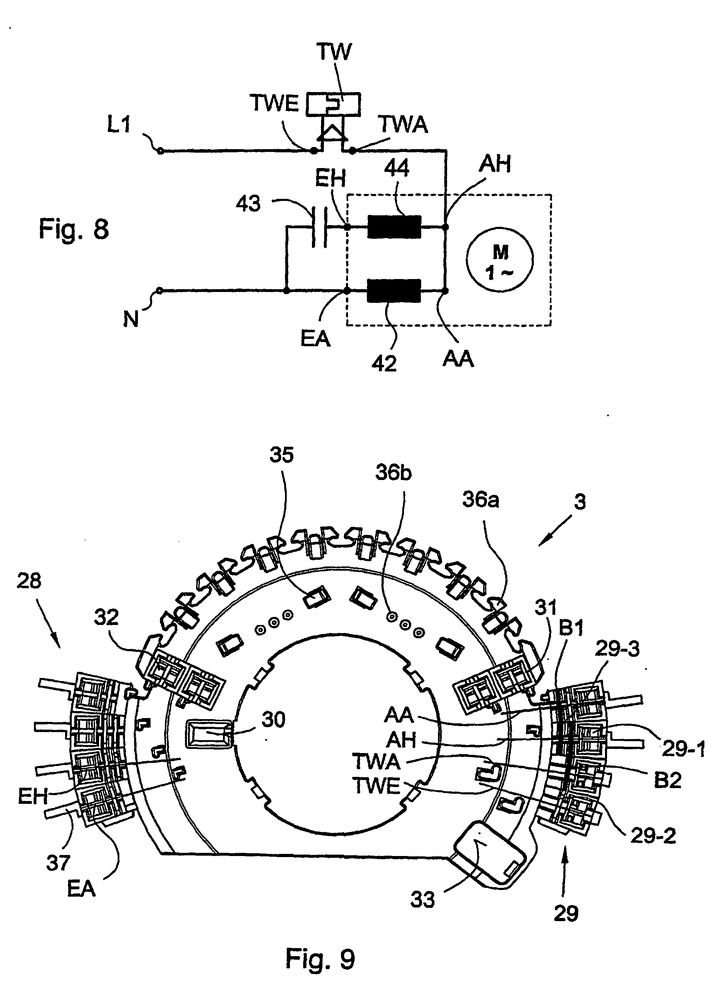

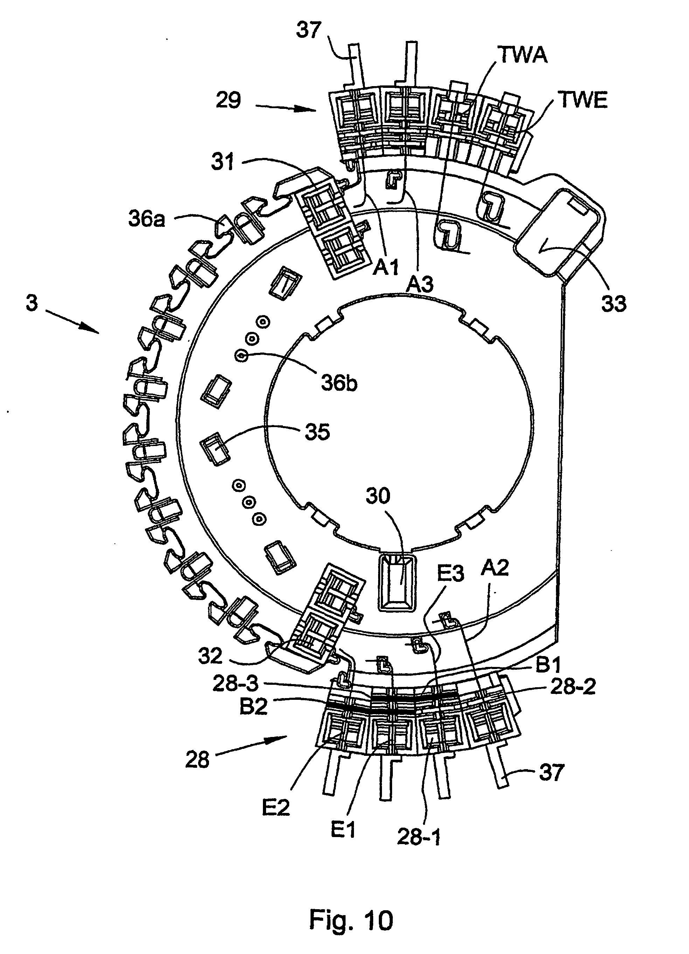

Des weiteren ist zu sehen, daß auf der Schaltscheibe 3 zur Aufnahme und Halterung ihrer Kontaktteile 12 und/oder der elektrischen Anschlüsse der Wicklungen des Stators 2, die für verschiedene mögliche Schaltungsvarianten anhand Fig. 9 und 10 nachfolgend noch genauer erläutert werden, Taschen 28, 29, 30, 31, 32 angeordnet bzw. ausgebildet sind. Eine Tasche 30, die insbesondere im Bereich des inneren Randes des Bodens 27 der Schaltscheibe 3 angeordnet sein kann, bildet dabei eine Aufnahmetasche für Kontaktiermittel zur Herstellung einer elektrischen Verbindung, insbesondere einer Steckverbindung, mit dem elektrischen Anschluß einer Erdleitung des Stators 2. Die Taschen 31, 32 sind zum elektrischen Anschluß bei gestufter Motorausführung, d.h. für Motoren mit umschaltbarer Drehzahl, bestimmt.

Außerdem könnte die Schaltscheibe 3 auch Rastelemente zur Verrastung mit dem Stator 2, insbesondere mit einer Endscheibe 6 des Stators 2, und/oder zur Verrastung mit der Statorbuchse 8 aufweisen.

Am Rand der Schaltscheibe 3 ist eine Aufnahme 33 für einen Temperaturwächter ausgebildet. Des weiteren ist zu erkennen, daß die Schaltscheibe 3 auf ihrer im Montagezustand dem Stator 2 abgewandten Seite Fixiermittel 35 für die elektrischen Anschlüsse der Wicklungen des Stators 2 aufweist. Außerdem sind am Rand und auf dem Boden 27 verschiedenartige Füge- und Umlenkhilfen 36a, 36b, für diese Anschlüsse vorgesehen. Insbesondere im Bereich von Taschen 28, 29 sind an der Schaltscheibe 3 radial abstehende Fixiermittel 37 für Drahtenden der elektrischen Anschlüsse der Wicklungen des Stators 2 und gegebenenfalls eines Temperaturwächters ausgebildet, die jedoch nach der Verschaltung bzw. dem Anschluß der Motorwicklungen entfernt werden.

In besonders vorteilhafter Weise sind einige Taschen 28, 29 (erstere vergrößert und im einzelnen mit den Bezugszeichen 28a, 28b, 28c, 28d versehen in Fig. 7 dargestellt) auf der Schaltscheibe 3 als durch Zwischenwände 38a, 38b, 38c getrennte Mehrfach-Kontaktkammern ausgebildet. Eine Mehrfachkontaktkammer umfaßt dabei jeweils mindestens zwei, vorzugsweise drei, Teilkammem 28-1, 28-2, 28-3. Auch diese sind untereinander durch Zwischenwände 39a, 39b getrennt Die Teilkammern 28-1, 28-2, 28-3 einer Mehrfachkontaktkammer liegen in radialer Richtung hintereinander, während die als Mehrfachkontaktkammern ausgebildeten Taschen 28a, 28b, 28c, 28d am Rand der Schaltscheibe 3 in Umfangsrichtung nebeneinanderliegen.

Umfangsparallel verlaufende Außenwände 40a, 40b, 40c und Zwischenwände 39a, 39b der Taschen 28 weisen dabei Einlegeschlitze 41 a, 41 b, 41 c, 41 d zur Aufnahme von insbesondere radial ausgerichteten Drahtenden der elektrischen Anschlüsse der Wicklungen des Stators 2 auf. Radial verlaufende Zwischenwände 38a, 38b, 38c der Taschen 28 weisen statt dessen Schlitze 41e, 41f zur Aufnahme von insbesondere umfangsparallel ausgerichteten elektrischen Brückenelementen für die elektrischen Anschlüsse der Wicklungen des Stators 2 auf. Auf diese Weise ist es möglich, daß zum elektrischen Anschluß der Wicklungen des Stators 2 zur Realisierung einer definierten Motorschaltung mindestens zwei Drahtenden der Wicklungen auf der Schaltscheibe, insbesondere in den Mehrfachkontaktkammem 28 doppelt (in Fig. 7 die rechts und links außenliegende Kammern 28a, 28d) oder auch dreifach (in Fig. 7 die in der Mitte liegenden Kammern 28b, 28c) kontaktiert werden können, und zwar vorzugsweise mittels Schneidklemmkontakten durch mindestens ein gemeinsames elektrisches Brückenelement und durch ein Kontaktteil 11 des Anschlußteils 10. Dies wird nachfolgend anhand verschiedener elektrischer Motorschaltungen noch deutlicher.

So zeigt Fig. 9 die Verschaltung eines erfindungsgemäßen Elektromotors, der als Einphasen-Kondensatormotor geschaltet ist, wobei das prinzipielle, an sich bekannte, entsprechende Schaltbild in Fig. 8 dargestellt ist. Der Einphasen-Kondensatormotor weist eine Arbeitswicklung 42 und eine mit einem Kondensator 43 in Reihe geschaltete Hilfswicklung 44 auf. Der Kondensator 43 wird außerhalb des Motors verschaltet und kann deshalb bei den nachfolgenden Betrachtungen unberücksichtigt bleiben. Dadurch ergeben sich vier Drahtenden der zu verschaltenden Wicklungen auf der Schaltscheibe 3, und zwar jeweils Anfang AA und Ende EA der Arbeitswicklung 42 und Anfang AH und Ende EH der Hilfswicklung 44.

Außerdem ist Fig. 8 und 9 zu entnehmen, daß ein Temperaturwächter vorgesehen ist, der in der dafür vorgesehenen Aufnahme 33 plaziert werden kann. Von diesem Temperaturwächter sind ebenfalls die Drahtenden (Anfang TWA und Ende TWE) dargestellt.

Wie nun Fig. 9 zeigt, können zum elektrischen Anschluß der Wicklungen des Stators 2 eines Einphasen-Kondensator-Motors zwei Drahtenden der Wicklungen auf der Schaltscheibe 3, insbesondere in den Mehrfachkontaktkammern, doppelt kontaktiert werden, und zwar vorzugsweise mittels Schneidklemmkontakten durch mindestens ein gemeinsames elektrisches Brückenelement B1 jeweils in zweiten oder in dritten Teilkammern 29-2, 29-3. Insbesondere sind dabei der Anfang AA der Arbeitswicklung 42 und der Anfang AH der Hilfswicklung 44 durch das Brückenelement B1 elektrisch verbunden, das sich jeweils in zwei dritten Teilkammern 29-3 befindet.

Ein zweites Brückenelement B2, das sich jeweils in zwei zweiten Teilkammern 29-2 befindet, verbindet den Anfang AH der Hilfswicklung 44 mit dem Anfang TWA des Temperaturwächters, so daß der Anfang AH der Hilfswicklung 44 zweifach kontaktiert wird.

Die Enden der Arbeitswicklung EA und die der Hilfswicklung EH werden zur diametral gegenüberliegenden Mehrfachkontaktkammer 28 geführt und dort mit den in den Teilkammem 28-1 befindlichen Kontaktteilen 12 kontaktiert. Über die Kontaktteile 11 des Anschlußteils 10 ist dann in montiertem Zustand die Verbindung mit dem Motoranschlußkabel 13 hergestellt. Die Kontaktierung des zweiten Endes TWE des Temperaturwächters mit dem Anschlußteil 10 erfolgt in der entsprechenden Teilkammer 29-1.

Alle Drahtenden EA, EH, AA, AH, TWE, TWA verlaufen dabei radial durch die in Fig. 7 dargestellten Einlegeschlitze 41 a, 41 b, 41 c, 41 d der umfangsparallel ausgerichteten Außenwände 40a, 40b, 40c und Zwischenwände 39a, 39b der Taschen 28, 29, die allerdings in Fig. 9 nicht eigens bezeichnet sind. Die Brückenelemente B1, B2 liegen statt dessen in den Schlitzen 41 e, 41f und übergreifen dabei die radial verlaufenden Zwischenwände 38a, 38b, 38c der Taschen 28, 29.

Fig. 10 zeigt den Anschluß der Wicklungen des Stators 2 eines Drehstrommotors. Die Wicklungen eines solchen Motors haben drei Anfänge A1, A2, A3 und drei Enden E1, E2, E3. Zur Realisierung z.B. einer Sternschaltung sind durch ein Brückenelement B2 zwei Enden E1, E2 in zwei Teilkammern 28-2 elektrisch miteinander verbunden und durch ein anderes Brückenelement B1 in zwei Teilkammern 28-3 das Ende E1 mit dem Ende E3, so daß eine Zweifachkontaktierung für das Ende E1 vorliegt.

Die Anfänge A1, A2 und A3 sowie der Anfang TWA und das Ende TWE des Temperaturwächters werden in freie Kontaktkammem 28-1 bzw. 29-1 geführt und durch ein Kontaktteil 11 des Anschlußteils 10 kontaktiert.

In ähnlicher Weise läßt sich durch die Möglichkeit der Mehrfachbrückenverbindungen auch die Verschaltung eines Drehstrommotors in Dreieckschaltung realisieren. Ebenso ist eine Drehrichtungsumkehr sowohl beim EinphasenWechselstrommotor als auch beim Drehstrommotor leicht herstellbar, wobei die Anschlußpunkte der Wicklungsenden entsprechend angepaßt werden müssen.

Durch das beschriebene Schaltungssystem mit den Mehrfachkontaktkammern können - wie gezeigt wurde - somit auf einfache Weise die verschiedensten Motorgrundschaltungen (Einphasen-/Drehstrom-, Stern-/Dreieck-, rechts-/linksdrehend und mit einem Temperaturwächter verschaltet) realisiert werden, wobei alle Varianten mit nur einer Ausführung der Schaltscheibe 3 realisiert werden können.

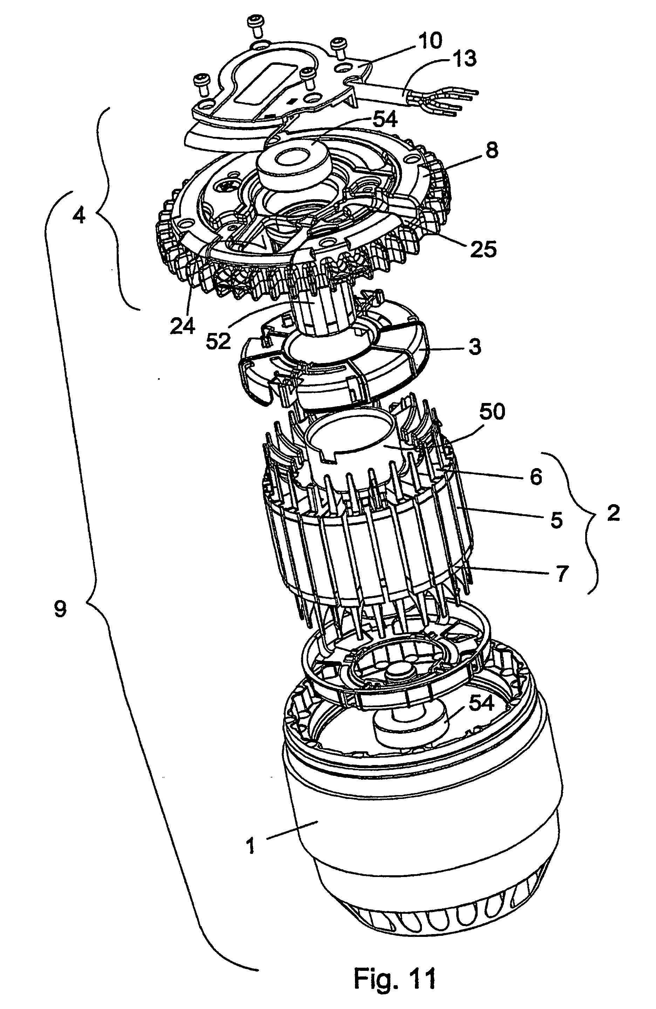

Fig. 11 bis 15 betreffen eine zweite Ausführung eines erfindungsgemäßen Elektromotors, bei der das Anschlußteil 10 an der Schaltscheibe 3 bzw. der gesamten Geräteeinheit 9 mittels Schraubverbindungen befestigt ist. Soweit diese gemeinsame Merkmale mit der ersten Ausführung aufweist, wird auf diese Merkmale nicht nochmals im Detail eingegangen.

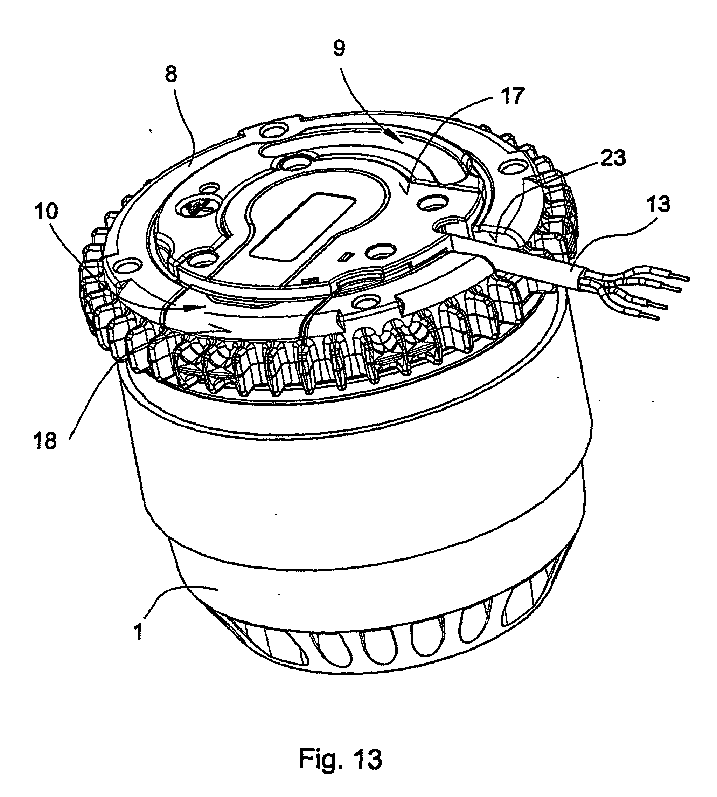

Wie Fig. 11 und 13 zeigen, ist der Grundaufbau der zweiten Ausführung der gleiche, wie der ersten Ausführung. Unterschiede zwischen der zweiten und der ersten Ausführung der Erfindung bestehen aber insbesondere in der Ausbildung des Anschlußteils 10, der Statorbuchse 8 und der Schaltscheibe 3. Es handelt sich hierbei um eine Schaltscheibe 3 für eine ungestufte Motorausführung, d.h. es wird nur eine einzige Drehzahlvariante realisiert.

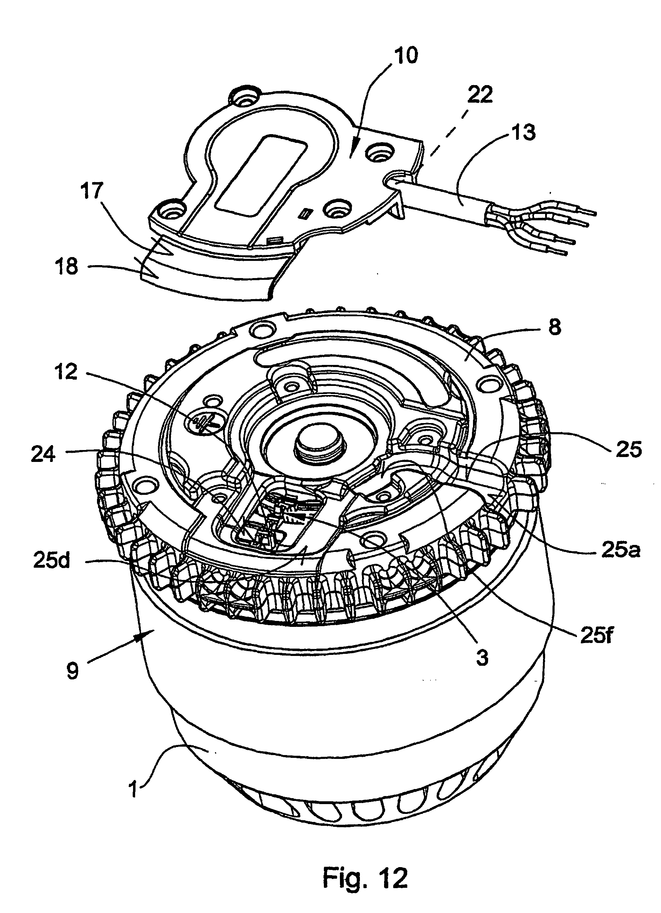

Die Statorbuchse 8 (Fig. 12) ist in der zweiten Ausführung des erfindungsgemäßen Elektromotors in ihrer Grundgestalt wiederum kreisscheibenförmig ausgebildet. Sie weist aber im Gegensatz zur ersten Ausführung nur eine Durchtrittsöffnung 24 für die Kontaktteile 11 des Anschlußteiles 10 und/oder die Kontaktteile 12 der Schaltscheibe 3 auf. Die Statorbuchse 8 kann vorteilhafterweise - wie dargestellt (Fig. 13) - eine Aufnahme für das Anschlußteil 10 bilden, derart daß ihre Oberfläche mit der Oberseite des Bodens 17 des Anschlußteiles 10 fluchtet.

Die Statorbuchse 8 weist wie die erste Ausführung auf ihrer dem Anschlußteil 10 zugewandten Seite einen insbesondere trogförmigen Kabelkanal 25 für das Motoranschlußkabel 13 auf, der sich im Gegensatz zur ersten Ausführung aber nicht in Teilkanäle verzweigt (Fig. 12). Er endet an der Durchtrittsöffnungen 24 für die Kontaktteile 11 des Anschlußteiles 10 und/oder für die Kontaktteile 12 der Schaltscheibe 3. Der Kabelkanal 25 weist wiederum einen vom Umfang der Statorbuchse 8 ausgehenden, im wesentlichen radial nach innen gerichteten Eingangsbereich 25a auf. Im Anschluß an seinen Eingangsbereich 25a erfolgt insbesondere zur Zugentlastung des Anschlußkabels 13 eine Verlaufsänderung von einer im wesentlichen radialen Richtung (Eingangsbereich 25a) in eine im wesentlichen umfangsparallele Richtung 25f. Dieser Zugentlastungsbereich 25f weist einen etwas geringerem Querschnitt als der Eingangsbereich 25a auf. In Analogie zur ersten Ausführung kann sich wiederum ein Vereinzelungsbereich 25d für die elektrische Anschlußleitung 13 mit gegenüber dem Eingangsbereich 25a vergrößertem Querschnitt anschließen. Man erreicht somit auch bei Schlauchleitung, bei der eine gewisse Abmantellänge der Litzen für die automatische Verarbeitung der Anschlag- bzw. der Kontaktteile erforderlich ist, eine kompakte Bauform des Motors.

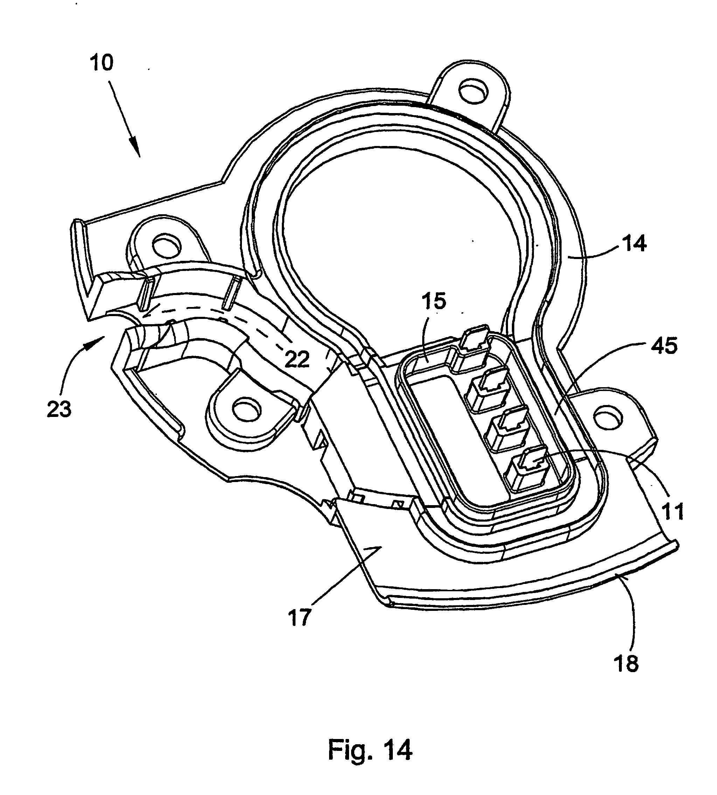

Fig. 14 zeigt eine perspektivische Unteransicht des Anschlußteils 10 in seiner zweiten Ausführung. Diese Ausführungsform kann - abgesehen von den eingesetzten Kontaktelementen 11 - ein einteiliges Bauteil bilden, d.h. Abdeckung und Halterung der Kontaktelemente 11 zum Anschluß des Motoranschlußkabels sind ineinander integriert, was zu der sehr kompakten möglichen Bauweise des erfindungsgemäßen Motors beiträgt. Es ist jedoch auch möglich, auch diese Ausführungsfom zweiteilig auszubilden, und das Anschlußteil 10 aus Abdeckteil 14 und Kontaktierungsteil 15 zusammenzusetzen. Das mit Motoranschlußkabel 13 versehene Kontaktierungsteil 15 wird dabei mittels nicht dargestellter Rastelemente mit dem Abdeckteil 14 verbunden, wobei zur Realisierung eines erhöhten Feuchtigkeitsschutzes bei beiden Ausführungen ein Verguß der Teile möglich ist. Der Kabelkanal 23 des Anschlußteils 10 kann dabei, wie Fig. 14 des weiteren zeigt, in analoger Weise wie der Kabelkanal 25 der Statorbuchse 8 aufgebaut sein, d.h. einen Eingangsbereich, einen Zugentlastungsbereich 25f und einen Verei nzelungsbereich aufweisen und den Kabelkanal 25 der Statorbuchse 8 im Sinne einer zweiten Halbschale komplementär ergänzen. Er kann sich zumindest teilweise auf der der Statorbuchse 8 zugewandten Seite des Anschlußteiles 10 befinden.

Am Boden 17 des Anschlußteiles 10, insbesondere einen Bereich, in dem die Kontaktteile 11 angeordnet sind, umfassend kann unterseitig eine Nut 45 angeordnet sein, die vorteilhafterweise zur Auskleidung mit einem Abdichtmittel dienen kann. Es kann sich hierbei um eine O-Ring-Dichtung oder um eine Vergußmasse handeln, damit ein erhöhter Feuchtigkeitsschutz realisiert werden kann.

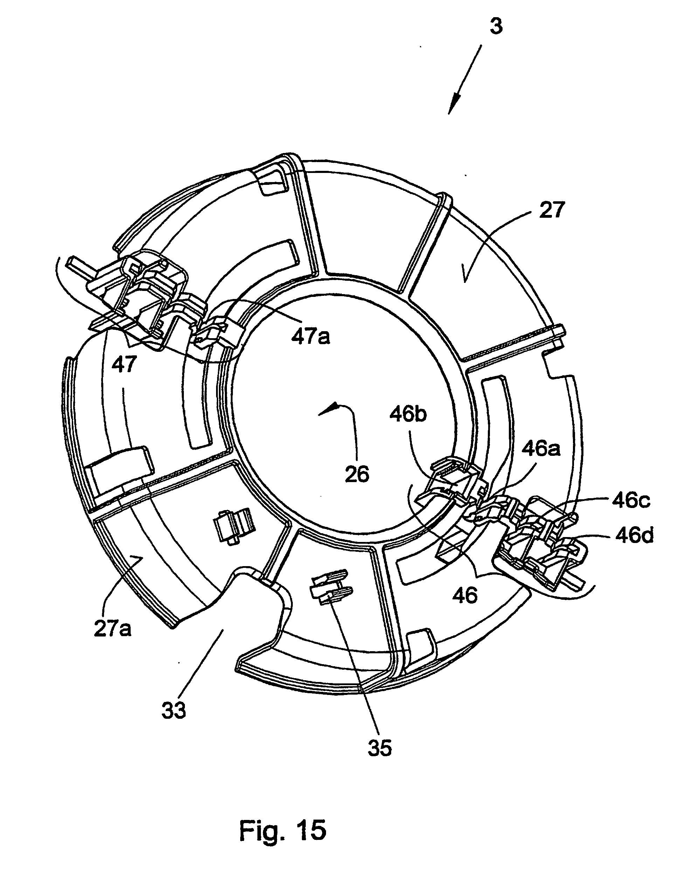

Fig. 15 zeigt eine Darstellung der Schaltscheibe 3 des erfindungsgemäßen Elektromotors in seiner zweiten Ausführung. Daraus ist zu entnehmen, daß die Schaltscheibe 3 eine kreisförmige Grundgestalt mit einer zentrischen Durchtrittsöffnung 26 für den Stirnisolationsschaft des Stators 2 aufweist. Die Schaltscheibe 3 besitzt einen im wesentlichen flachen oder leicht gewölbten Boden 27 mit einem Randsteg 27a an ihrem Umfangsrand. Der Durchmesser der Schaltscheibe 3 ist dabei so bemessen, daß nach dem Aufsetzen der Schaltscheibe 3 auf den Stimisolationsschaft 50 des Stators 2 eine vollständige Abdeckung des Wickelkopfes der Wicklung realisiert wird.

Des weiteren ist wiederum zu sehen, daß auf der Schaltscheibe 3 zur Aufnahme und Halterung ihrer Kontaktteile 12 und/oder der elektrischen Anschlüsse der Wicklungen des Stators 2 Taschen 46, 47 angeordnet bzw. ausgebildet sind. Eine Tasche 46b, die insbesondere im Bereich des inneren Randes des Bodens 27 der Schaltscheibe 3 angeordnet sein kann, bildet dabei eine Aufnahmetasche für Kontaktiermittel zur Herstellung einer elektrischen Verbindung, insbesondere einer Steckverbindung, mit dem elektrischen Anschluß einer Erdleitung des Stators 2. Die anderen Taschen 46a, 47a dienen zum Anschluß eines Temperaturwächters oder sind (Taschen 47) zum elektrischen Anschluß von Brücken bestimmt. So sind z.B. die Taschen 47 zur Herstellung einer Dreier-Brücke zur Verbindung der beiden Wicklungsenden mit einem Ende des Temperaturwächters vorgesehen, während die Taschen 46 a, 46c, 46d einen Abgriff von Wicklungsanfängen und zweitem Anschluß des Temperaturwächters zum Anschluß des Motoranschlußkabels 13 bereitstellen.

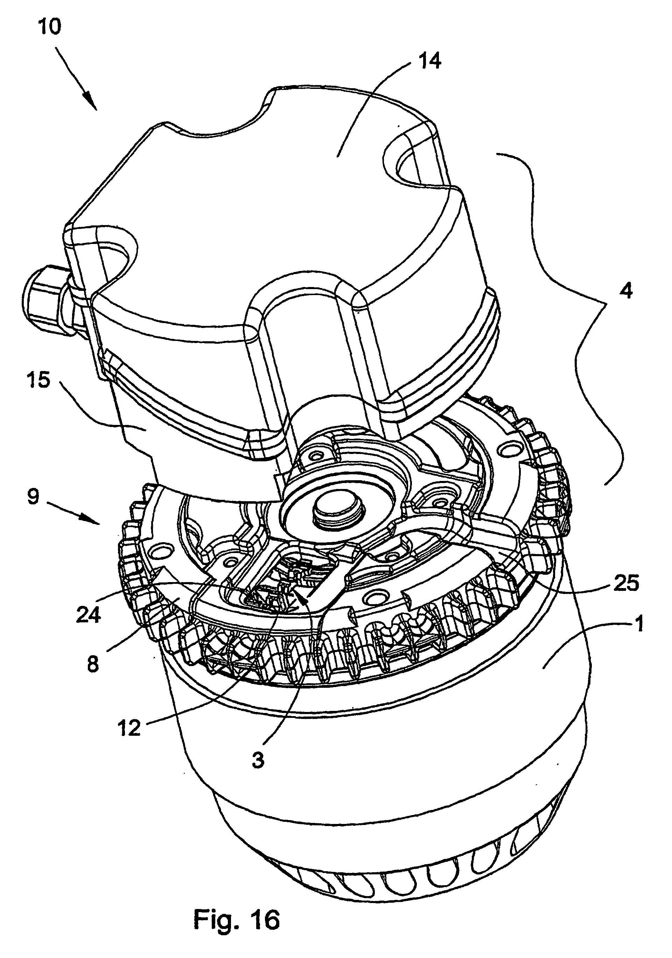

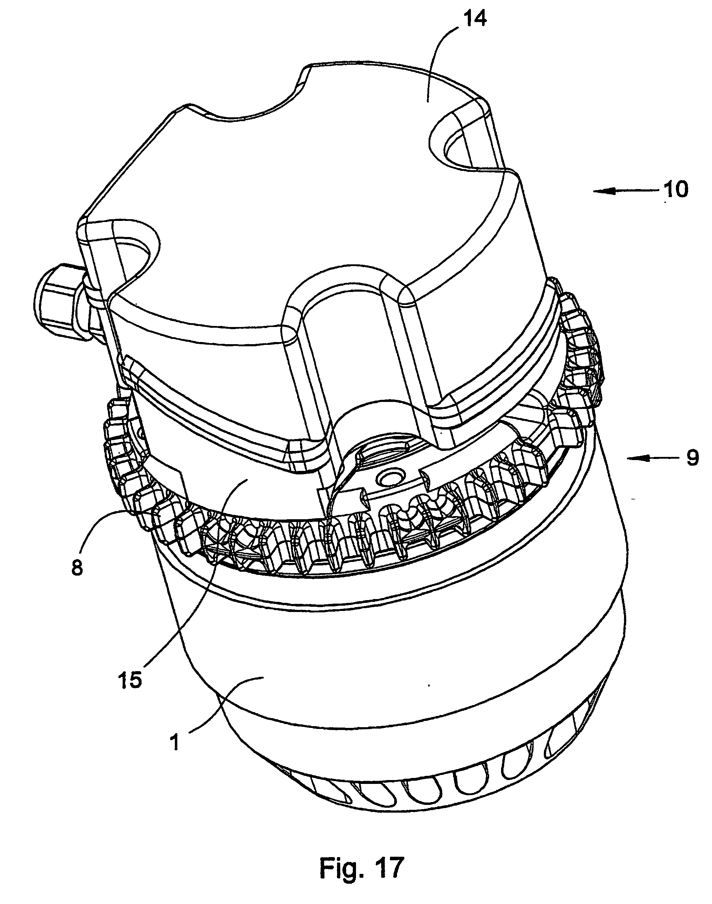

Nach der dritten Ausführung eines erfindungsgemäßen Elektromotors (Fig. 16 bis 19) ist das Anschlußteil 10 als Klemmenkasten ausgebildet Der Klemmenkasten besteht aus einem das Abdeckteil 14 bildenden Oberteil und einem das Kontaktierungsteil 15 bildenden Unterteil und kann auf die - wie im zweiten Ausführungsbeispiel aufgebaute - Geräteeinheit 9 in einfacher Weise nachträglich aufgesetzt (aufgesteckt) werden (Fig. 17). Der Klemmenkasten bildet eine separate Baugruppe, die standortunabhängig gefertigt und nachträglich einfach am Motor montiert werden kann.

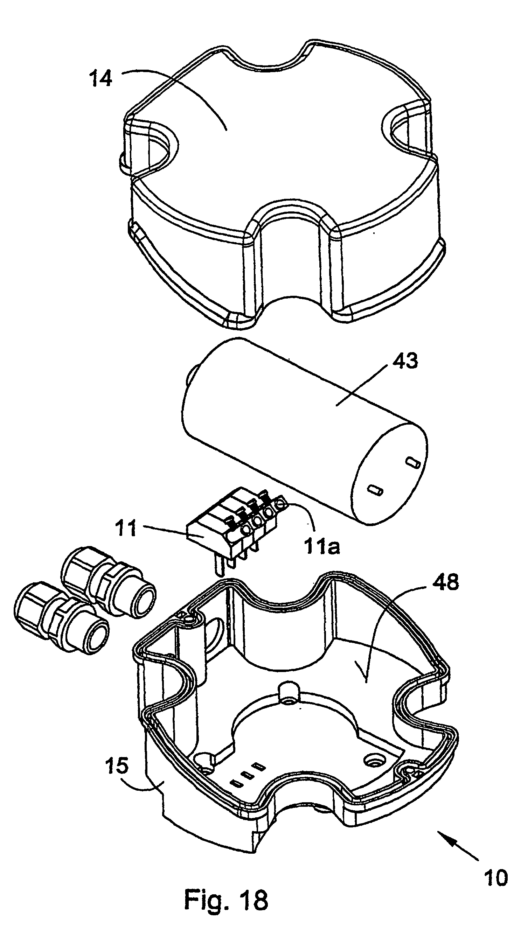

Wie Fig. 18 zeigt, definiert der Klemmenkasten einen größeren Aufnahmeraum als die anderen Anschlußteile 10, insbesondere können in seinem Unterteil ein Aufnahmeraum sowie Haltemittel und Kontaktierungsmittel für einen Kondensator 43 - vorzugsweise für einen Einphasen-Kondensatormotor (Fig. 8) ausgebildet sein. Der Klemmenkasten, kann dabei einen Boden 48 aufweisen, in dem die Kontaktteile 11 des Anschlußteiles 10 befestigt sind, wobei die Kontaktteile 11 den Boden 48 des Klemmenkastens durchragen.

Die Kontaktteile 11 des Anschlußteiles 10 können dabei wiederum mit Vorteil als Stecker, insbesondere als Flachstecker, ausgebildet sein. Außerdem können die Kontaktteile 11 des Anschlußteiles 10 - wie auch bei den beiden anderen Ausführungen - Klemmen 10a, insbesondere Schraubklemmen, zum Anschluß des Motoranschlußkabels 13 aufweisen.

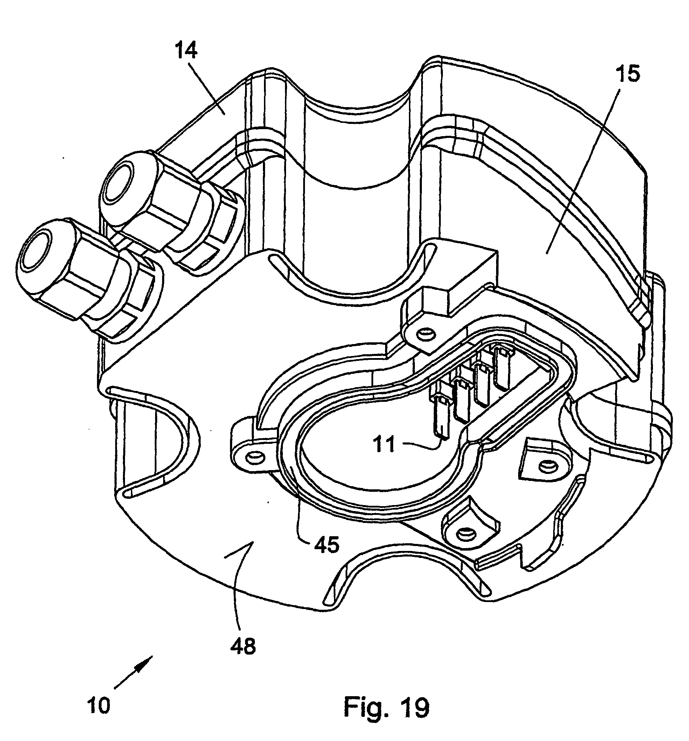

Wie in Fig. 19 dargestellt und schon bei der zweiten Ausführung der Erfindung beschrieben, kann am Boden 17 des Anschlußteiles 10 (Klemmenkastens), insbesondere einen Bereich, in dem die Kontaktteile 11 angeordnet sind, umfassend unterseitig eine Nut 45 angeordnet sein, die vorteilhafterweise zur Auskleidung mit einem Abdichtmittel dienen kann.

Die Erfindung ist nicht auf die dargestellte Ausführungsbeispiele beschränkt, sondern umfaßt auch alle im Sinne der Erfindung gleichwirkenden Ausführungen, beispielsweise können insbesondere das Anschlußteil 10, die Schaltscheibe 3 oder die Statorbuchse 8 in geeigneter Weise hinsichtlich ihrer Ausführung variieren, wie dies auch schon an den verschiedenen Ausführungsbeispielen deutlich wird. Um einen sicheren Zusammenhalt der einzelnen Bauteile zu gewährleisten, können bedarfsweise anstelle der genannten Klammern 16 auch verschiedene weitere geeignete Verbindungstechniken (Verschrauben, Verrasten usw.) zusätzlich oder alternativ Anwendung finden.

### Bezugszeichen

- 1: Rotor
- 2: Stator
- 3: Schaltscheibe
- 4: Flanschteil
- 5: Statorblechpaket von 2
- 6, 7: Endscheiben von 2
- 8: Statorbuchse
- 9: Geräteeinheit aus 1, 2, 3 und 8
- 10: Anschlußteil aus 14 und 15
- 11: Kontaktteile von 10
- 11a: Klemme an 11
- 12: Kontaktteile von 3
- 13: Motoranschlußkabel
- 14: Abdeckteil von 10
- 15: Kontaktierungsteil von 10
- 15a: Boden von 15
- 15b: Randsteg von 15
- 15c: Ausschnitte in 15a
- 15d: Durchtrittsöffnung in 15a
- 16: Klammern
- 17: Boden von 10
- 17a: nach unten abgesetzter Bereich von 10
- 18: Wandungssteg von 10 an 17
- 19: Ringsteg an 17
- 20: Ringsteg um 19 an 15
- 21: Codierung an 19
- 22: Durchtrittsöffnung in 17
- 23: Kabelkanal in 10
- 24: Durchtrittsöffnung in 8 für 11/12
- 25: Kabelkanal in 8
- 25a: Eingangsbereich von 25
- 25b, 25c: Teilkanäle von 25
- 25d, 25e: Vereinzelungsbereiche von 25
- 25f: Zugentlastungsbereich von 25
- 25g: Erhebungsbereiche an der Stirnseite von 8
- 26: Durchtrittsöffnung in 3
- 27: Boden von 3
- 27a: Randsteg von 27
- 28-32: Taschen (allgemein) von 3
- 28a-28d: Taschen im einzelnen (Mehrfachkontaktkammem)
- 28-1: erste Teilkammer von 28
- 28-2: zweite Teilkammer von 28
- 28-3: dritte Teilkammer von 28
- 29-1: erste Teilkammer von 29
- 29-2: zweite Teilkammer von 29
- 29-3: dritte Teilkammer von 29
- 31,32: Taschen
- 33: Aufnahme für Temperaturwächter von 3
- 35: Fixiermittel von 3
- 36a, 36b: Füge- und Umlenkhilfen von 3
- 37: radiale Fixiermittel an 3
- 38a-38c: Zwischenwände zwischen 28a/28b, 28b/28c ...
- 39a, 39b: Zwischenwände zwischen 28-1/28-2, 28-2/28-3
- 40a-40c: Außenwände von 28 (29)
- 41a-41d: Einlegeschlitze in 39a, 39b
- 41e, 41f: Einlegeschlitze in 38a-38c
- 42: Arbeitswicklung
- 43: Kondensator
- 44: Hilfswicklung
- 45: Nut an 17/48
- 46: Taschen auf 3 (allgemein)
- 46a, 46b: Taschen auf 3 (im einzelnen)
- 46c, 46d: Taschen auf 3 (im einzelnen)
- 47: Taschen auf 3 (allgemein)
- 47a: Taschen auf 3 (im einzelnen)
- 48: Boden von 15 (Klemmenkasten)
- 50: Stirnisolationsschaft
- 52: Lagertragrohr
- 54: Lagerelemente
- 56: Abdichtmittel

- AA: Drahtanfang von 42
- AH: Drahtanfang von 44
- A1-A3: Drahtanfänge Drehstrommotor
- B1, B2: Brückenelemente
- EA: Drahtende von 42
- EH: Drahtende von 44
- E1-E3: Drahtenden Drehstrommotor
- TWA: Drahtanfang Temperaturwächter
- TWE: Drahtende Temperaturwächter

## Patentansprüche

1. Elektromotor, insbesondere Außenläufermotor, mit einem Rotor (1), mit einem Stator (2), mit einer elektrische Anschlüsse (AA, AH, A1, A2, A3, EA, EH, E1, E2, E3) von Wicklungen des Stators (2) kontaktierenden Schaltscheibe (3), welche an einer Frontseite des Stators (2) befestigbar ist, und mit einem mit dem Stator (2) frontseitig verbindbaren, die Schaltscheibe (3) überdeckenden Flanschteil (4),
**dadurch gekennzeichnet, daß** das Flanschteil (4) aus einer auf die Schaltscheibe (3) aufsetzbaren scheibenförmigen Statorbuchse (8), die mit dem Rotor (1), dem Stator (2) und der Schaltscheibe (3) eine Geräteeinheit (9) bildet, und aus einem auf die Statorbuchse (8) aufsetzbaren Anschlußteil (10) mit Kontaktteilen (11) zur elektrischen Verbindung mit korrespondierenden elektrischen Kontaktteilen (12) der Schaltscheibe (3) besteht, wobei an die Kontaktteile (11) des Anschlußteiles (10) ein Motoranschlußkabel (13) anschließbar ist.

2. Elektromotor nach Anspruch 1,
**dadurch gekennzeichnet, daß** die Kontaktteile (11) des Anschlußteiles (10) als Stecker, insbesondere als Flachstecker, ausgebildet sind.

3. Elektromotor nach Anspruch 1,
**dadurch gekennzeichnet, daß** die Kontaktteile (11) des Anschlußteiles (10) als Schneidklemmkontakte ausgebildet sind.

4. Elektromotor nach einem der Ansprüche 1 bis 3,
**dadurch gekennzeichnet, daß** die Kontaktteile (11) des Anschlußteiles (10) Klemmen (11a), insbesondere Schraubklemmen, zum Anschluß des Motoranschlußkabels (13) aufweisen.

5. Elektromotor nach einem der Ansprüche 1 bis 4,
**dadurch gekennzeichnet, daß** die Kontaktteile (12) der Schaltscheibe (3) an ihrer Unterseite als Schneidklemmkontakte zur Kontaktierung der Wicklungsdrähte und an ihrer Oberseite als Steckkontakte für die Kontaktteile (11) des Anschlußteils (10) ausgebildet sind.

6. Elektromotor nach einem der Ansprüche 1 bis 5,
**dadurch gekennzeichnet, daß** auf der Schaltscheibe (3) zur Aufnahme und Halterung der Kontaktteile (12) der Schaltscheibe (3) und/oder der elektrischen Anschlüsse (AA, AH, A1, A2, A3, EA, EH, E1, E2, E3) der Wicklungen des Stators (2) Taschen (28, 29, 30, 31, 32, 46, 47) angeordnet bzw. ausgebildet sind.

7. Elektromotor nach einem der Ansprüche 1 bis 6,
**dadurch gekennzeichnet, daß** die Statorbuchse (8) in ihrer Grundgestalt kreisscheibenförmig ausgebildet ist.

8. Elektromotor nach einem der Ansprüche 1 bis 6,
**dadurch gekennzeichnet, daß** die Statorbuchse (8) an ihrem Umfangsrand mit Kühlrippen versehen ist.

9. Elektromotor nach einem der Ansprüche 1 bis 8,
**dadurch gekennzeichnet, daß** die Statorbuchse (8) mindestens eine Durchtrittsöffnung (24) für die Kontaktteile (11) des Anschlußteiles (10) und/oder die Kontaktteile (12) der Schaltscheibe (3) aufweist.

10. Elektromotor nach einem der Ansprüche 1 bis 9,
**dadurch gekennzeichnet, daß** die Statorbuchse (8) auf ihrer dem Anschlußteil (10) zugewandten Seite einen insbesondere trogförmigen, an einer/der Durchtrittsöffnung (24) für die Kontaktteile (11) des Anschlußteiles (10) und/oder für die Kontaktteile (12) der Schaltscheibe (3) endenden Kabelkanal (25) für das Motoranschlußkabel (13) aufweist.

11. Elektromotor nach einem der Ansprüche 1 bis 10,
**dadurch gekennzeichnet, daß** das Anschlußteil (10) auf seiner der Statorbuchse (8) zugewandten oder abgewandten Seite einen insbesondere trogförmigen, in einem Bereich, in dem die Kontaktteile (11, 12) angeordnet sind, endenden Kabelkanal (23) für das Motoranschlußkabel (13) aufweist.

12. Elektromotor nach Anspruch 10 oder 11,
**dadurch gekennzeichnet, daß** der Kabelkanal (25) der Statorbuchse (8) und/oder der Kabelkanal (23) des Anschlußteiles (10) einen vom Umfang ausgehenden, im wesentlichen radial nach innen gerichteten Eingangsbereich (25a) aufweist/aufweisen.

13. Elektromotor nach einem der Ansprüche 10 bis 12,
**dadurch gekennzeichnet, daß** sich der Kabelkanal (25) der Statorbuchse (8) und/oder der Kabelkanal (23) des Anschlußteiles (10), insbesondere im Anschluß an seinen/ihren Eingangsbereich (25a), in zwei Teilkanäle (25a, 25b) verzweigt/verzweigen.

14. Elektromotor nach einem der Ansprüche 10 bis 13,
**dadurch gekennzeichnet, daß** der Kabelkanal (25) der Statorbuchse (8) und/oder der Kabelkanal (23) des Anschlußteiles (10), zur Bildung eines Zugentlastungsbereichs (25f) eine Verlaufsänderung von einer im wesentlichen radialen Richtung in eine im wesentlichen umfangsparallele Richtung aufweist/aufweisen.

15. Elektromotor nach einem der Ansprüche 12 bis 14,
**dadurch gekennzeichnet, daß** der Kabelkanal (25) der Statorbuchse (8) und/oder der Kabelkanal (23) des Anschlußteiles im Ansschluß an seinen/ihren Eingangsbereich (25a) und/oder Zugentlastungsbereich (25f) zumindest einen Vereinzelungsbereich (25d, 25e) für die elektrische Anschlußleitung (13) mit gegenüber dem Eingangsbereich (25a) vergrößertem Querschnitt aufweist/aufweisen.

16. Elektromotor nach einem der Ansprüche 1 bis 15,
**dadurch gekennzeichnet, daß** das Anschlußteil (10) einteilig ausgebildet ist, wobei es ein Abdeckteil (14) und ein Kontaktierungsteil (15) mit den Kontaktteilen (11) zur steckenden elektrischen Verbindung mit der Schaltscheibe (3) und zum Anschluß des Motoranschlußkabels (13) aufweist.

17. Elektromotor nach einem der Ansprüche 1 bis 15,
**dadurch gekennzeichnet, daß** das Anschlußteil (10) zumindest zweiteilig ausgebildet ist, wobei es ein Abdeckteil (14) und ein Kontaktierungsteil (15) mit den Kontaktteilen (11) zur steckenden elektrischen Verbindung mit der Schaltscheibe (3) und zum Anschluß des Motoranschlußkabels (13) aufweist.

18. Elektromotor nach einem der Ansprüche 1 bis 17,
**dadurch gekennzeichnet, daß** die Innenseite des Anschlußteils (10) einen mit Abdeckmittel (56) ausgekleideten abgesetzten Bereich (17a) aufweist, der Erhebungen (25g) auf der Stirnseite des Statorflansches (8) übergreift und den Umfangsrand der Durchtrittsöffnungen (24) abdichtet.

19. Elektromotor nach einem der Ansprüche 1 bis 17,
**dadurch gekennzeichnet, daß** am Boden (17, 48) des Anschlußteiles (10), insbesondere einen Bereich, in dem die Kontaktteile (11) angeordnet sind, umfassend unterseitig eine Nut (45) angeordnet ist.

20. Elektromotor nach Anspruch 19,
**dadurch gekennzeichnet, daß** die Nut (45) mit einem Abdichtmittel ausgekleidet ist.

21. Elektromotor nach einem der Ansprüche 16 bis 20,
**dadurch gekennzeichnet, daß** das Kontaktierungsteil (15) als Steckergehäuse ausgebildet ist.

22. Elektromotor nach einem der Ansprüche 16 bis 21,
**dadurch gekennzeichnet, daß** das Abdeckteil (14) topfförmig, mit einem im wesentlichen flachen oder leicht gewölbten Boden (17) und mit einem im wesentlichen senkrecht vom Boden (17) abragenden, im wesentlichen zylindrischen Wandungssteg (18) ausgebildet ist.

23. Elektromotor nach einem der Ansprüche 16 bis 22,
**dadurch gekennzeichnet, daß** das Abdeckteil (14), insbesondere im Boden (17), eine Durchtrittsöffnung (22) für das Motoranschlußkabel (13) aufweist.

24. Elektromotor nach einem der Ansprüche 16 bis 23,
**dadurch gekennzeichnet, daß** im Abdeckteil (14) ein vom Wandungssteg (18) ausgehender im Boden (17) radial nach innen zur Durchtrittsöffnung (22) verlaufender Kabelkanal (23) für das Motoranschlußkabel (13) ausgebildet ist.

25. Elektromotor nach einem der Ansprüche 1 bis 20,
**dadurch gekennzeichnet, daß** das Anschlußteil (10) als Klemmenkasten ausgebildet ist.

26. Elektromotor nach Anspruch 25,
**dadurch gekennzeichnet, daß** der Klemmenkasten aus einem insbesondere das/ein Abdeckteil (14) bildenden Oberteil und einem insbesondere das/ein Kontaktierungsteil (15) bildenden Unterteil besteht.

27. Elektromotor nach Anspruch 25 oder 26,
**dadurch gekennzeichnet, daß** der Klemmenkasten einen insbesondere in seinem Unterteil angeordneten Aufnahmeraum sowie Haltemittel und Kontaktierungsmittel für einen Kondensator (43) umfaßt.

28. Elektromotor nach einem der Ansprüche 25 bis 27,
**dadurch gekennzeichnet, daß** der Klemmenkasten, insbesondere dessen Unterteil, einen Boden (48) aufweist, in dem die Kontaktteile (11) des Anschlußteiles (10) befestigt sind, wobei die Kontaktteile (11) den Boden (48) des Klemmenkastens durchragen.

29. Elektromotor nach einem der Ansprüche 1 bis 28,
**dadurch gekennzeichnet, daß** die Schaltscheibe (3) eine ringförmige, halbringförmige, ringabschnittförmige oder ringsegmentförmige Grundgestalt mit einer zentrischen Durchtrittsöffnung (26) für einen Stimisolationsschaft des Stators (2) aufweist.

30. Elektromotor nach einem der Ansprüche 1 bis 29,
**dadurch gekennzeichnet, daß** die Schaltscheibe (3) einen im wesentlichen flachen oder leicht gewölbten Boden (27) aufweist.

31. Elektromotor nach einem der Ansprüche 1 bis 20,
**dadurch gekennzeichnet, daß** die Schaltscheibe (3) Rastelemente zur Verrastung mit dem Stator (2), insbesondere mit einer Endscheibe (6) des Stators (2), und/oder zur Verrastung mit der Statorbuchse (8) aufweist.

32. Elektromotor nach einem der Ansprüche 1 bis 31,
**dadurch gekennzeichnet, daß** die Schaltscheibe (3) eine Aufnahme (33) für einen Temperaturwächter aufweist.

33. Elektromotor nach einem der Ansprüche 1 bis 32,
**dadurch gekennzeichnet, daß** die Schaltscheibe (3) auf ihrer im Montagezustand dem Stator (2) abgewandten Seite Fixiermittel (35) sowie Füge- und Umlenkhilfen (36a, 36b) für die elektrischen Anschlüsse (AA, AH, A1, A2, A3, EA, EH, E1, E2, E3) der Wicklungen des Stators (2) aufweist.

34. Elektromotor nach einem der Ansprüche 1 bis 33,
**dadurch gekennzeichnet, daß** die Schaltscheibe (3), insbesondere im Bereich von Taschen (28, 29) radial abstehende Fixiermittel (37) für Drahtenden der elektrischen Anschlüsse (AA, AH, A1, A2, A3, EA, EH, E1, E2, E3) der Wicklungen des Stators (2) und gegebenenfalls eines Temperaturwächters aufweist.

35. Elektromotor nach einem der Ansprüche 1 bis 34,
**dadurch gekennzeichnet, daß** die Schaltscheibe (3), insbesondere im Bereich des inneren Randes ihres Bodens (27), eine Aufnahmetasche (30, 46b) für Kontaktiermittel zur Herstellung einer elektrischen Verbindung, insbesondere einer Steckverbindung, mit dem elektrischen Anschluß einer Erdleitung des Stators (2) aufweist.

36. Elektromotor nach einem der Ansprüche 1 bis 35,
**dadurch gekennzeichnet, daß** Taschen (28, 29) auf der Schaltscheibe (3) als Mehrfach-Kontaktkammern ausgebildet sind.

37. Elektromotor nach Anspruch 36,
**dadurch gekennzeichnet, daß** eine Mehrfachkontaktkammer mindestens zwei, vorzugsweise drei, Teilkammem (28-1, 28-2, 28-3; 29-1, 29-2, 29-3) umfaßt, die untereinander durch Zwischenwände (39a, 39b) getrennt sind.

38. Elektromotor nach Anspruch 36 oder 37,
**dadurch gekennzeichnet, daß** die Teilkammem (28-1, 28-2, 28-3; 29-1, 29-2, 29-3) einer Mehrfachkontaktkammer in radialer Richtung hintereinanderliegen.

39. Elektromotor nach einem der Ansprüche 6 bis 38,
**dadurch gekennzeichnet, daß** mehrere Taschen (28a, 28b, 28c, 28d) auf der Schaltscheibe (3), insbesondere in Umfangsrichtung, nebeneinanderliegen.

40. Elektromotor nach einem der Ansprüche 36 bis 39,
**dadurch gekennzeichnet, daß** die als Mehrfachkontaktkammem ausgebildeten Taschen (28, 29) im Umfangsbereich auf der Schaltscheibe (3) angeordnet sind.

41. Elektromotor nach einem der Ansprüche 36 bis 40,
**dadurch gekennzeichnet, daß** insbesondere umfangsparallel verlaufende Außenwände (40a, 40b, 40c) und Zwischenwände (39a, 39b) der Taschen (28a, 28b, 28c, 28d, 29) Einlegeschlitze (41a, 41b, 41c, 41d) zur Aufnahme von insbesondere radial ausgerichteten Drahtenden der elektrischen Anschlüsse (AA, AH, A1, A2, A3, EA, EH, E1, E2, E3) der Wicklungen des Stators (2) aufweisen.

42. Elektromotor nach einem der Ansprüche 36 bis 39,
**dadurch gekennzeichnet, daß** Zwischenwände, insbesondere radial verlaufende Zwischenwände (38a, 38b, 38c) der Taschen (28, 29) Schlitze (41e, 41f) zur Aufnahme von insbesondere umfangsparallel ausgerichteten elektrischen Brückenelementen (B1, B2) für die elektrischen Anschlüsse (AA, AH, A1, A2, A3, EA, EH, E1, E2, E3) der Wicklungen des Stators (2) aufweisen.

43. Elektromotor nach einem der Ansprüche 1 bis 42,
**dadurch gekennzeichnet, daß** zum elektrischen Anschluß der Wicklungen des Stators zur Realisierung einer definierten Motorschaltung mindestens zwei Anschlüsse (AA, AH, A1, A2, A3, EA, EH, E1, E2, E3) der Wicklungen auf der Schaltscheibe (3), insbesondere in den Mehrfachkontaktkammem, mindestens doppelt kontaktiert werden, und zwar vorzugsweise mittels Schneidklemmkontakten durch mindestens ein gemeinsames elektrisches Brückenelement (B1, B2) und durch ein Kontaktteil (11) des Anschlußteils (10).

44. Elektromotor nach einem der Ansprüche 36 bis 43,
**dadurch gekennzeichnet, daß** in den Mehrfachkontaktkammem eine doppelte Kontaktierung eines Anschlusses (TWA) eines Temperaturwächters über ein mit einem Anschluß (EA) der Wicklungen des Stators (2) gemeinsames Brückenelement (B2) erfolgt.

## Claims

1. Electric motor, in particular an external rotor motor, having a rotor (1), having a stator (2) having a switching disc (3) which makes contact with electrical connections (AA, AH, A1, A2, A3, EA, EH, E1, E2, E3) of windings of the stator (2) and can be attached to a front face of the stator (2), and having a flange part (4) which can be connected at the front to the stator (2) and covers the switching disc (3),
**characterized in that** the flange part (4) comprises a stator bush (B), which is in the form of a disc, can be fitted to the switching disc (3) and, together with the rotor (1), the stator (2) and the switching disc (3), forms an appliance unit (9), and comprises a connecting part (10), which can be fitted to the stator bush (8) and has contact parts (11) for electrical connection to corresponding electrical contact parts (12) of the switching disc (3), in which case a motor connecting cable (13) can be connected to the contact parts (11) of the connecting part (10).

2. Electric motor according to Claim 1,
**characterized in that** the contact parts (11) of the connecting part (10) are in the- form of plugs, in particular flat plugs.

3. Electric motor according to Claim 1,
**characterized in that** the contact parts (11) of the connecting part (10) are in the form of insulation-displacement terminal contacts.

4. Electric motor according to one of Claims 1 to 3,
**characterized in that** the contact parts (11) of the connecting part (10) have terminals (11a), in particular screw terminals, for connection of the motor connecting cable (13).

5. Electric motor according to one of Claims 1 to 4,
**characterized in that** the contact parts (12) of the switching disc (3) are designed on their lower face as insulation-displacement terminal contacts for making contact with the winding wires, and are designed on their upper face as plug contacts for the contact parts (11) of the connecting part (10).

6. Electric motor according to one of Claims 1 to 5,
**characterized in that** pockets (28, 29, 30, 31, 32, 46, 47) are arranged or formed on the switching disc (3) in order to retain and hold the contact parts (12) of the switching disc (3) and/or the electrical connections (AA, AH, A1, A2, A3, EA, EH, E1, E2, E3) for the windings of the stator (2).

7. Electric motor according to one of Claims 1 to 6,
**characterized in that**, fundamentally the stator bush (8) is in the form of a circular disc.

8. Electric motor according to one. of Claims 1 to 6,
**characterized in that** the stator bush (8) is provided with cooling ribs on its circumferential edge.

9. Electric motor-according to one of Claims 1 to 8,
**characterized in that** the stator bush (8) has at least one aperture opening (24) for the contact parts (11) of the connecting part (10) and/or for the contact parts (12) of the switching disc (3).

10. Electric motor according to one of Claims 1 to 9,
**characterized in that** on its side facing the connecting part (10), the stator bush (8) has a cable duct (25) which is, in particular, in the form of a trough and ends at a/the aperture opening (24) for the contact parts (11) of the connecting part (10) and/or for the contact parts (12) of the switching disc (3), for the motor connecting cable (13).

11. Electric motor according to one of Claims 1 to 10,
**characterized in that**, on its side facing or facing away from the stator bush (8), the connecting part (10) has a cable duct (23) which, in particular, is in the form of a trough and ends in an area in which the contact parts (11, 12) are arranged, for the motor connecting cable (13).

12. Electric motor according to Claim 10 or 11,
**characterized in that** the cable duct (25) on the stator bush (8) and/or the cable duct (23) for the connecting part (10) have/has an entry area (25a), which originates from the circumference and points essentially radially inwards.

13. Electric motor according to one of Claims 10 to 12,
**characterized in that** the cable duct (25) on the stator bush (8) and/or the cable duct (23) for the connecting part (10) branch/branches into two channel elements (25a, 25b), in particular adjacent to their/its entry area (25a).

14. Electric motor according to one of Claims 10 to 13,
**characterized in that** the cable duct (25) on the stator bush (8) and/or the cable duct (23) for the connecting part (10) have/has a profile change, in order to form a strain relief area (25f), from an essentially radial direction to a direction which is essentially parallel to the circumference.

15. Electric motor according to one of Claims 12 to 14,
**characterized in that** the cable duct (25) on the stator bush (8) and/or the cable duct (23) for the connecting part have/has at least one separation area (25d, 25e) for the electrical connecting line (13) with a larger cross section than the entry area (25a) adjacent to their/its entry area (25a) and/or strain relief area (25f).

16. Electric motor according to one of Claims 1 to 15,
**characterized in that** the connecting part (10) is integral, having a cover part (14) and a contact-making part (15) with the contact parts (11) in order to form a plug electrical connection to the switching disc (3), and in order to form the connection for the motor connecting cable (13).

17. Electric motor according to one of Claims 1 to 15,
**characterized in that** the connecting part (10) is in at least two parts, having a cover part (14) and a contact-making part (15) with the contact parts (11) in order to form a plug electrical connection to the switching disc (3) and in order to form the connection for the motor connecting cable (13).

18. Electric motor according to one of Claims 1. to 17,
**characterized in that** the inner face of the connecting part (10) has a stepped area (17a) which is lined with covering means (56), engages over projections (25g) on the end face of the stator flange (8), and seals the circumferential edge of the aperture openings (24).

19. Electric motor according to one of Claims 1 to 17,
**characterized in that** a groove (45) is arranged circumferentially on the lower face on the base (17, 48) of the connecting part (10), in particular an area in which the contact parts (11) are arranged.

20. Electric motor according to Claim 19,
**characterized in that** the groove (45) is lined with a sealing means.

21. Electric motor according to one of Claims 16 to 20,
**characterized in that** the contact-making part (15) is in the form of a plug housing.

22. Electric motor according to one of Claims 16 to 21,
**characterized in that** the cover part (14) is in the form of a pot, with an essentially flat or slightly domed base (17), and with an essentially cylindrical wall web (18) which projects essentially at right. angles from the base (17).

23. Electric motor according to one of Claims 16 to 22,
**characterized in that** the cover part (14) has an aperture opening (22) for the. motor connecting cable (13), in particular in the base (17).

24. Electric motor according to one of Claims 16 to 23,
**characterized in that** a cable duct (23) which originates from the wall web (18) and runs radially inwards in the base (17) to the aperture opening (22) is formed for the motor connecting cable (13) in the cover part (14).

25. Electric motor according to one of Claims 1 to 20,
**characterized in that** the connecting part (10) is in the form of a terminal box.

26. Electric motor according to Claim 25,
**characterized in that** the terminal box comprises an upper part which, in particular, forms the/a cover part (14), and a lower part which, in particular, forms the/a contact-making part (15).

27. Electric motor according to Claim 25 or 26,
**characterized in that** the terminal box has a holding area, which is arranged in particular in its lower part, as well as a holding means and contact-making means for a capacitor (43).

28. Electric motor according to one of Claims 25 to 27,
**characterized in that** the terminal box, in particular its lower part, has a base .(48) in which the contact parts (11) of the connecting part (10) are mounted, with the contact parts (11) passing through the base (48) of the terminal box.

29. Electric motor according to one of Claims 1 to 28,
**characterized in that** the switching disc (3) has an annular, half-annular, annular-section or annular-segment fundamental shape, with a central aperture opening (26) for an end insulation shaft of the stator (2).

30. Electric motor according to one of: Claims 1 to 29,
**characterized in that** the switching disc (3) has an essentially flat or slightly domed base (27).

31. Electric motor according to one of Claims 1 to 20,
**characterized in that** the switching disc (3) has latching elements for latching to the stator (2), in particular to an end disc (6) of the stator (2), and/or for latching to the stator bush (8).

32. Electric motor according to one of Claims 1 to 31,
**characterized in that** the switching disc (3) has a holder (33) for a temperature monitor.

33. Electric motor according to one of Claims 1 to 32,
**characterized in that**, on its side facing away from the stator (2) in the assembled state, the switching disc (3) has fixing means (35) as well as joining and deflection aids (36a, 36b) for the electrical connections (AA, AH, A1, A2, A3, EA, EH, E1, E2, E3) for the windings of the stator (2).

34. Electric motor according to one of Claims 1 to 33,
**characterized in that** the switching disc (3) has a fixing means (37), which projects radially in particular in the area of pockets (28, 29), for wire ends of the electrical connections (AA, AH, A1, A2, A3, EA, EH, E1, E2, E3) for the windings of the stator (2), and possibly for a temperature monitor.

35. Electric motor according to one of Claims 1 to 34,
**characterized in that**, in particular in the area of the inner edge of its base (27), the switching disc (3) has: a holding pocket (30, 46b) for contact-making means in order to produce an electrical connection, in particular a. plug connection, to the electrical connection for an earth line of the stator (2).

36. Electric motor according to one of Claims 1 to 35,
**characterized in that** the pockets (28, 29) are formed on the switching disc (3) as multiple contact chambers.

37. Electric motor according to Claim 36,
**characterized in that** one multiple contact chamber comprises at least two and preferably three chamber elements (28-1, 28-2, 28-3; 29-1, 29-2, 29-3) which are separated from one anther by intermediate walls (39a, 39b).

38. Electric motor according to Claim 36 or 37,
**characterized in that** the chamber elements (28-1, 28-2, 28-3; 29-1, 29-2, 29-3) of a multiple contact chamber are located one behind the other in the radial direction.

39. Electric motor according to one of Claims 6 to 38,
**characterized in that** two or more pockets (28a, 28b, 28c, 28d) are located alongside one another on the switching disc (3), in particular in the circumferential direction.

40. Electric motor according to one of Claims 36 to 39,
**characterized in that** the pockets (28, 29), which are in the form of multiple contact chambers, are arranged in the circumferential area on the switching disc (3).

41. Electric motor according to one of Claims 36 to 40,
**characterized in that** outer walls (40a, 40b, 40c) which, in particular, run parallel to the: circumference, and intermediate. walls (39a, 39b) of the pockets (28a, 28b, 28c, 28d, 29) have insertion slots (41a, 41b, 41c, 41d) for holding wire ends, which, in particular, are aligned radially, of the electrical connections (AA, AH, A1, A2, A3, EA, EH, E1, E2, E3) for the windings of the stator (2).

42. Electric motor according to one of Claims 36 to 39, **characterized in that** intermediate walls, in particular radially running intermediate walls (38a, 38b, 38c) of the pockets (28, 29) have slots (41e, 41f) for holding electrical bridging elements (B1, B2), which, in particular, are aligned parallel to the circumference, for the electrical connections (AA, AH, A1, A2, A3, EA, EH, E1, E2, E3) for the windings of the stator (2).

43. Electric motor according to one of Claims 1 to 42,
**characterized in that**, for electrical connection of the windings of the stator in order to provide a defined motor circuit, at least two connections (AA, AH, A1, A2, A3, EA, EH, E1, E2, E3) for the windings on the switching disc (3), in particular in the multiple contact chambers, are made contact with at least twice, to be precise preferably by means of insulation-displacement terminal contacts, by at least one common electrical bridging element (B1, B2) and by a contact part (11) of the connecting part (10).

44. Electric motor according to one of Claims 36 to 43, **characterized in that** a double contact. is made with a connection (TWA) of a temperature monitor in the multiple contact chambers via a bridging element (B2) which is common to a connection (EA) for the windings of the stator (2).

## Revendications

1. Moteur électrique, en particulier moteur à rotor extérieur, comprenant un rotor (1), un stator (2), un disque commutateur (3) qui entre en contact avec des connexions électriques, (AA, AH, A1, A2, A3, EA, EH, E1, E2, E3) d'enroulements du stator (2), qui peut être fixé à une face avant du stator (2) et une partie flasque (4) qui peut être reliée côté frontal au stator (2) et qui recouvre le disque commutateur (3),
**caractérisé en ce que** la partie flasque (4) est formée d'une douille de stator (8) en forme de disque qui peut être emboîtée sur le disque commutateur (3), qui forme une unité d'appareil (9) avec le rotor (1), le stator (2) et le disque commutateur (3), et d'une partie de connexion (10) pouvant être emboîtée sur la douille de stator (8), qui comprend des pièces de contact (11) servant à la connexion électrique avec des pièces de contact électriques correspondantes (12) du disque commutateur (3), et dans lequel un câble de connexion du moteur (13) peut être connecté aux pièces de contact (11) de la partie de connexion (10).

2. Moteur électrique selon la revendication 1,
**caractérisé en ce que** les pièces de contact (11) de la partie de connexion (10) sont constituées par des broches, en particulier des broches plates.

3. Moteur électrique selon la revendication 1,
**caractérisé en ce que** les pièces de contact (11) de la partie de connexion (10) sont constituées par des contacts à pince à lame.

4. Moteur électrique selon une des revendications 1 à 3,
**caractérisé en ce que** les pièces de contact (11) de la partie de connexion (10) présentent des pinces (11a), en particulier des pinces à vis, pour la connexion du câble de connexion du moteur (13).

5. Moteur électrique selon une des revendications 1 à 4,
**caractérisé en ce que** les pièces de contact (12) du disque commutateur (3) sont réalisées, au niveau de leur côté inférieur, sous la forme de contacts à pince à lame destinés à établir le contact avec les fils des enroulements et, au niveau de leur côté supérieur, sous la forme de contacts à broche pour les pièces de contact (11) de la partie de connexion (10).

6. Moteur électrique selon une des revendications 1 à 5,
**caractérisé en ce que**, sur le disque commutateur (3), sont disposés ou formés des logements (28, 29, 30, 31, 32, 46, 47) pour la réception et la retenue des pièces de contact (12) du disque commutateur (3) et/ou des connexions électriques (AA, AH, A1, A2, A3, EA, EH, E1, E2, E3) des enroulements du stator (2).

7. Moteur électrique selon une des revendications 1 à 6,
**caractérisé en ce que** la douille de stator (8) est en forme de disque circulaire dans sa configuration de base.

8. Moteur électrique selon une des revendications 1 à 6,
**caractérisé en ce que** la douille de stator (8) est munie de nervures de refroidissement le long de son bord périphérique.

9. Moteur électrique selon une des revendications 1 à 8,
**caractérisé en ce que** la douille de stator (8) présente au moins une ouverture de passage (24) pour les pièces de contact (11) de la partie de connexion (10) et/ou pour les pièces de contact (12) du disque commutateur (3).

10. Moteur électrique selon une des revendications 1 à 9,
**caractérisé en ce que** la douille de stator (8) présente, sur son côté dirigé vers la partie de connexion (10), un canal de câble (25), en particulier en forme d'auget, pour le câble de connexion du moteur (13), qui se termine au niveau d'une ouverture de passage, ou de l'ouverture de passage, (24) prévue pour les pièces de contact (11) de la partie de connexion (10), et/ou pour les pièces de contact (12) du disque commutateur (3).

11. Moteur électrique selon une des revendications 1 à 10,
**caractérisé en ce que** la partie de connexion (10) présente, sur son côté dirigé vers la douille de stator (8) ou sur le côté qui s'en éloigne, un canal de câble (23) pour le câble de connexion du moteur (13), qui se termine en particulier en forme d'auget, dans une région dans laquelle les pièces de contact (11, 12) sont disposées.

12. Moteur électrique selon une des revendications 10 ou 11,
**caractérisé en ce que** le canal de câble (25) de la douille de stator (8) et/ou le canal de câble (23) de la partie de connexion (10) présente(nt) une région d'entrée (25a) partant de la circonférence et orientée sensiblement radialement vers l'intérieur.

13. Moteur électrique selon une des revendications 10 à 12,
**caractérisé en ce que** le canal de câble (25) de la douille de stator (8) et/ou le canal de câble (23) de la partie de connexion (10) se ramifie(nt) en deux canaux partiels (25a, 25b), en particulier à la suite de sa, ou de leur, région d'entrée (25a).

14. Moteur électrique selon une des revendications 10 à 13,
**caractérisé en ce que**, pour la formation d'une zone de soulagement de traction (25f), le canal de câble (25) de la douille de stator (8) et/ou le canal de câble (23) de la partie de connexion (10) présente(nt) un changement de direction pour passer d'une direction sensiblement radiale à une direction sensiblement parallèle à la périphérie.

15. Moteur électrique selon une des revendications 12 à 14,
**caractérisé en ce que** le canal de câble (25) de la douille de stator (8) et/ou le canal de câble (23) de la partie de connexion présente(nt), à la suite de sa, ou de leur, région d'entrée (25a) et/ou zone de soulagement de traction (25f), au moins une région d'individualisation (25d, 25e) pour la ligne de connexion électrique (13) possédant une section agrandie par rapport à la région d'entrée (25a).

16. Moteur électrique selon une des revendications 1 à 15,
**caractérisé en ce que** la partie de connexion (10) est formée en une seule pièce, cette partie comprenant une partie de recouvrement (14) et une partie d'établissement du contact (15) qui possède les pièces de contact (11) destinées à la liaison électrique à embrochage avec le disque commutateur (3) et à la connexion du câble de connexion du moteur (13).

17. Moteur électrique selon une des revendications 1 à 15,
**caractérisé en ce que** la partie de connexion (10) est réalisée au moins en deux pièces, cette partie comprenant une partie de recouvrement (14) et une partie d'établissement du contact (15) possédant les pièces de contact (11) pour la liaison électrique à embrochage avec le disque commutateur (3) et pour la connexion du câble de connexion de moteur (13).

18. Moteur électrique selon une des revendications 1 à 17,
**caractérisé en ce que** le côté intérieur de la partie de connexion (10) présente une région (17a) à épaulement, revêtue par un moyen de recouvrement (56), et qui emboîte des protubérances (25g) prévues sur le côté frontal de la bride de stator (8), et qui forme joint étanche sur le bord périphérique des ouvertures de passage (24).

19. Moteur électrique selon une des revendications 1 à 17,
**caractérisé en ce qu'**au fond (17, 48) de la partie de connexion (10) est disposée, sur le côté inférieur, une rainure (45) qui entoure en particulier une région dans laquelle les pièces de contact (11) sont disposées.

20. Moteur électrique selon la revendication 19,
**caractérisé en ce que** la rainure (45) est revêtue d'un moyen d'étanchéité.

21. Moteur électrique selon une des revendications 16 à 20,
**caractérisé en ce que** la partie d'établissement du contact (15) est constituée par une boîte à bornes.

22. Moteur électrique selon une des revendications 16 à 21,
**caractérisé en ce que** la partie de recouvrement (14) est réalisée en forme de godet, avec un fond (17) sensiblement plat ou légèrement bombé et une nervure de paroi (18), sensiblement cylindrique, qui fait saillie sensiblement perpendiculairement sur le fond (17).

23. Moteur électrique selon une des revendications 16 à 22,
**caractérisé en ce que** la partie de recouvrement (14) présente, en particulier dans le fond (17) une ouverture de passage (22) pour le câble de connexion de moteur (13).

24. Moteur électrique selon une des revendications 16 à 23,
**caractérisé en ce que**, dans la partie de recouvrement (14) est formé un canal de câble (23) pour le câble de connexion de moteur (13), qui part de la nervure de paroi (18), et s'étend dans le fond (17) radialement vers l'intérieur, vers l'ouverture de passage (22).

25. Moteur électrique selon une des revendications 1 à 20,
**caractérisé en ce que** la partie de connexion (10) est constituée par une boîte à bornes.

26. Moteur électrique selon la revendication 25,
**caractérisé en ce que** la boîte à bornes est composée d'un partie supérieure qui forme en particulier la, ou une, partie de recouvrement (14) et d'une partie inférieure qui forme en particulier la, ou une, partie d'établissement du contact (15).

27. Moteur électrique selon la revendication 25 ou 26,
**caractérisé en ce que** la boîte à bornes comprend une chambre de logement, disposée dans sa partie inférieure, ainsi que des moyens de retenue et des moyens d'établissement du contact pour un condensateur (43).

28. Moteur électrique selon une des revendications 25 à 27,
**caractérisé en ce que** la boîte à bornes, en particulier sa partie inférieure, présente un fond (48) dans lequel les pièces de contact (11) de la partie de connexion (10) sont fixées, les pièces de contact (11) traversant le fond (48) de la boîte à bornes.

29. Moteur électrique selon une des revendications 1 à 28,
**caractérisé en ce que** le disque commutateur (3) présente une forme de base annulaire, semi-annulaire, en segments d'anneau ou en secteurs d'anneau, avec une ouverture de passage centrale (26) pour une tige isolante frontale du stator (2).

30. Moteur électrique selon une des revendications 1 à 29,
**caractérisé en ce que** le disque commutateur (3) présente un fond (27) sensiblement plat ou légèrement bombé.

31. Moteur électrique selon une des revendications 1 à 20,
**caractérisé en ce que** le disque commutateur (3) présente des éléments d'enclenchement pour assurer l'enclenchement avec le stator (2), en particulier avec un disque terminal (6) du stator (2) et/ou l'enclenchement avec la douille de stator (8).

32. Moteur électrique selon une des revendications 1 à 31,
**caractérisé en ce que** le disque commutateur (3) présente un logement (33) pour un contrôleur de température.

33. Moteur électrique selon une des revendications 1 à 32,
**caractérisé en ce que** le disque commutateur (3) présente, sur son côté éloigné du stator (2), dans l'état de montage, des moyens de fixation (35) ainsi que des auxiliaires de joint et de renvoi (36a, 36b) pour les connexions électriques (AA, AH, A1, A2, A3, EA, EH, E1, E2, E3) d'enroulements du stator (2).

34. Moteur électrique selon une des revendications 1 à 33,
**caractérisé en ce que** le disque commutateur (3) présente, en particulier dans la région de logements (28, 29), des moyens de fixation (37) en saillie radiale pour les extrémités de fils des connexions électriques (AA, AH, A1, A2, A3, EA, EH, E1, E2, E3) d'enroulements du stator (2) et éventuellement d'un contrôleur de température.

35. Moteur électrique selon une des revendications 1 à 34,
**caractérisé en ce que** le disque commutateur (3) présente, en particulier dans la région du bord inférieur de son fond (27), un logement (30, 46b) pour des moyens d'établissement du contact destinés à établir une liaison électrique, en particulier une liaison à embrochage, avec la connexion électrique d'une ligne de masse du stator (2).

36. Moteur électrique selon une des revendications 1 à 35,
**caractérisé en ce que** des logements (28, 29) formés sur le disque commutateur (3) constituent des chambres de contacts multiples.

37. Moteur électrique selon la revendication 36,
**caractérisé en ce qu'**une chambre de contacts multiples comprend au moins deux, de préférence trois, chambres partielles (28-1, 28-2, 28-3 ; 29-1, 29-2, 29-3) qui sont séparées les une des autres par des parois intermédiaires (39a, 39b).

38. Moteur électrique selon la revendication 36 ou 37,
**caractérisé en ce que** les chambres partielles (28-1, 28-2, 28-3 ; 29-1, 29-2, 29-3) d'une chambre de contacts multiples sont disposées l'une derrière l'autre dans la direction radiale.

39. Moteur électrique selon une des revendications 6 à 38,
**caractérisé en ce que** plusieurs logements (28a, 28b, 28c, 28d) sont disposés l'un à côté de l'autre, en particulier dans la direction périphérique, sur le disque commutateur (3).

40. Moteur électrique selon une des revendications 36 à 39,
**caractérisé en ce que** les logements (28, 29) constituant des chambres de contacts multiples sont disposés sur le disque commutateur (3) dans la région périphérique.

41. Moteur électrique selon une des revendications 36 à 40,
**caractérisé en ce que** les parois extérieures (40a, 40b, 40c) qui s'étendent en particulier parallèlement à la périphérie et les parois intermédiaires (39a, 39b) des logements (28a, 28b, 28c, 28d, 29) présentent des fentes d'insertion (41a, 41b, 41c, 41d) destinées à recevoir des extrémités de fils orientées en particulier radialement des connexions électriques (AA, AH, A1, A2, A3, EA, EH, E1, E2, E3) d'enroulements du stator (2).

42. Moteur électrique selon une des revendications 36 à 39,
**caractérisé en ce que** les parois intermédiaires, en particulier les parois intermédiaires s'étendant radialement (38a, 38b, 38c) des logements (28, 29) présentent des fentes (41e, 41f) destinées à recevoir des éléments de pontage électrique (B1, B2), en particulier orientés parallèlement à la périphérie, pour les connexions électriques (AA, AH, A1, A2, A3, EA, EH, E1, E2, E3) d'enroulements du stator (2).

43. Moteur électrique selon une des revendications 1 à 42,
**caractérisé en ce que**, pour la connexion électrique des enroulements du stator en vue de réaliser un circuit de moteur défini, au moins deux connexions (AA, AH, A1, A2, A3, EA, EH, E1, E2, E3) d'enroulements sont mises en contact sur le disque commutateur (3), en particulier dans les chambres de contacts multiples, au moins en double et plus précisément, de préférence au moyen de contacts à pince à lame par au moins un élément de pontage électrique commun (B1, B2) et par une pièce de contact (11) de la partie de connexion (10).

44. Moteur électrique selon une des revendications 36 à 43,
**caractérisé en ce que**, dans les chambres de contacts multiples, il se produit une mise en contact double d'une connexion (TWA) d'un contrôleur de température, par l'intermédiaire d'un élément de pontage (B2) commun, avec une connexion (EA) d'enroulements du stator (2).
